(19) Europäisches Patentamt
European Patent Office
Office européen des brevets

(11) **EP 1 704 695 B1**

(12) **FASCICULE DE BREVET EUROPEEN**

(45) Date de publication et mention
de la délivrance du brevet:
**27.02.2008 Bulletin 2008/09**

(21) Numéro de dépôt: **03789513.3**

(22) Date de dépôt: **27.11.2003**

(51) Int Cl.:
***H04L 29/06*** *(2006.01)*

(86) Numéro de dépôt international:
**PCT/FR2003/003502**

(87) Numéro de publication internationale:
**WO 2005/064885 (14.07.2005 Gazette 2005/28)**

(54) **SYSTEME D'INTERCEPTION DE DOCUMENTS MULTIMEDIAS**

ABFANGSYSTEM VON MULTIMEDIADOKUMENTEN

SYSTEM FOR INTERCEPTING MULTIMEDIA DOCUMENTS

(84) Etats contractants désignés:
**AT BE BG CH CY CZ DE DK EE ES FI FR GB GR HU IE IT LI LU MC NL PT RO SE SI SK TR**

(43) Date de publication de la demande:
**27.09.2006 Bulletin 2006/39**

(73) Titulaire: **Advestigo**
**92210 Saint Cloud (FR)**

(72) Inventeurs:
• **ESSAFI, Hassane**
**F-91400 Orsay (FR)**
• **PIC, Marc**
**F-75013 Paris (FR)**

• **FRANZINETTI, Jean-Pierre**
**F-33340 Gaillan en Medoc (FR)**
• **ZAITTOUNI, Fouad,**
**F-91198 Gif sur Yvette Cedex (FR)**
• **OULAHOUM, Keltoum**
**F-91198 Gif sur Yvette Cedex (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**EP-A- 0 986 229          WO-A-03/091990**
**US-A1- 2001 044 818**

EP 1 704 695 B1

**EP 1 704 695 B1**

## Description

La présente invention concerne un système d'interception de documents multimédias diffusés à partir d'un réseau.

L'invention concerne ainsi d'une façon générale un procédé et un système de traçabilité des contenus de documents numériques pouvant comporter aussi bien des images, du texte, des signaux audio, des signaux vidéo ou un mélange de ces différents types de contenus au sein de documents multimédias.

L'invention s'applique aussi bien à des systèmes d'interception actifs pouvant conduire à un blocage de la transmission de certaines informations qu'à des systèmes d'interception passifs permettant de repérer certaines informations transmises sans bloquer la retransmission de ces informations ou même à des systèmes de simple écoute n'affectant pas la transmission des signaux.

L'invention vise à permettre un contrôle efficace de la diffusion de l'information en assurant une interception efficace des informations diffusées à partir d'un réseau et l'identification fiable et rapide d'informations prédéterminées.

L'invention vise en outre à permettre une identification des documents même dans le cas où il existe de grandes quantités d'informations diffusées à partir d'un réseau.

Ces buts sont atteints grâce à un système d'interception de documents multimédias diffusés à partir d'un premier réseau, caractérisé en ce qu'il comprend un module d'interception et de traitement de paquets d'informations comportant chacun un en-tête d'identification et un corps de données, le module d'interception et de traitement de paquets comprenant des premiers moyens d'interception des paquets diffusés à partir du premier réseau, des moyens d'analyse de l'en-tête des paquets afin de déterminer si un paquet analysé fait partie d'une connexion déjà établie, des moyens de traitement des paquets reconnus comme faisant partie d'une connexion déjà établie pour déterminer l'identificateur de chaque paquet reçu et accéder à un conteneur de stockage où les données présentes dans chaque paquet reçu sont sauvegardées, et des moyens de création d'un automate chargé de traiter les paquets reçus propres à une nouvelle connexion si les moyens d'analyse de l'en-tête des paquets ont révélé qu'un paquet analysé constitue une demande de nouvelle connexion, les moyens de création d'un automate comprenant notamment des moyens de création d'un nouveau conteneur de stockage destiné à contenir les ressources nécessaires au stockage et à la gestion des données produites par les moyens de traitement de paquets associés à la nouvelle connexion, un triplet <identificateur, drapeau de l'état de la connexion, conteneur de stockage> étant créé et associé à chaque connexion par lesdits moyens de création d'un automate, et en ce qu'il comprend en outre des moyens pour analyser le contenu des données stockées dans les conteneurs, reconnaître le protocole utilisé parmi un ensemble de protocoles standards tels que notamment http, SMTP, FTP, POP, IMAP, TELNET, P2P, analyser le contenu transporté par ce protocole et reconstituer les documents interceptés.

De façon plus particulière, les moyens d'analyse et les moyens de traitement comprennent une première table d'établissement de connexion contenant, pour chaque connexion en cours d'établissement, un identificateur "idConnexion" et un drapeau "état connexion", et une deuxième table d'identification de conteneur contenant, pour chaque connexion déjà établie, un identificateur "idConnexion" et une référence "refConteneur" qui identifie le conteneur dédié au stockage des données extraites des trames de la connexion ayant pour identificateur "idConnexion".

Le drapeau "étatConnexion" de la première table d'établissement de connexion peut prendre trois valeurs possibles (P10, P11, P12) selon que le paquet détecté correspond à une demande de connexion par un client, à une réponse d'un serveur ou à une confirmation par le client.

Selon une caractéristique importante de la présente invention, les premiers moyens d'interception des paquets, les moyens d'analyse de l'en-tête des paquets, les moyens de création d'un automate, les moyens de traitement de paquets et les moyens d'analyse du contenu des données stockées dans les conteneurs fonctionnent de façon autonome et asynchrone.

Le système d'interception selon l'invention comprend en outre un premier module de stockage du contenu des documents interceptés par le module d'interception et de traitement de paquets et un deuxième module de stockage des informations concernant au moins l'émetteur et le destinataire des documents interceptés.

Avantageusement, le système d'interception comprend en outre un module de stockage d'informations concernant des composantes résultant d'une dissection du contenu des documents interceptés.

Selon un autre aspect de l'invention, le système d'interception comprend en outre un système centralisé comprenant des moyens de fabrication d'empreintes de documents sensibles à surveiller, des moyens de fabrication d'empreintes de documents interceptés, des moyens de stockage des empreintes fabriquées à partir des documents sensibles à surveiller, des moyens de stockage des empreintes fabriquées à partir des documents interceptés, des moyens de comparaison d'empreintes issues des moyens de stockage des empreintes fabriquées à partir des documents interceptés et d'empreintes issues des moyens de stockage des empreintes fabriquées à partir des documents sensibles à surveiller et des moyens de traitement d'alertes contenant les références des documents interceptés correspondant à des documents sensibles.

Dans ce cas, le système d'interception peut comprendre des moyens de sélection réagissant aux moyens de traitement d'alertes pour assurer le blocage ou la retransmission de documents interceptés, vers un deuxième réseau, selon les résultats délivrés par les moyens de production d'alertes.

Selon une application avantageuse, le système centralisé comprend en outre des moyens pour associer à chaque document sensible à surveiller des droits définissant les conditions d'exploitation du document, et des moyens de stockage des informations relatives à ces droits.

Le système d'interception selon l'invention peut aussi être interposé entre un premier réseau de type Intranet et un second réseau de type Intranet ou encore entre un premier réseau de type Internet et un second réseau de type Internet.

Le système d'interception selon l'invention peut être interposé entre un premier réseau de type Intranet et un second réseau de type Internet ou entre un premier réseau de type Internet et un second réseau de type Intranet.

Le système selon l'invention peut comprendre un générateur de requêtes à partir de documents sensibles à protéger, pour injecter des requêtes dans le premier réseau.

Selon un mode particulier de réalisation, le générateur de requêtes comprend :

- des moyens de production de requêtes à partir des documents sensibles à surveiller,
- des moyens de stockage des requêtes produites,
- des moyens de fouille du premier réseau à l'aide d'au moins un moteur de recherche utilisant les requêtes précédemment stockées,
- des moyens de stockage de références de fichiers suspects issus du premier réseau, et
- des moyens d'aspiration des fichiers suspects référencés dans les moyens de stockage de références et du voisinage éventuel de ces fichiers suspects.

Selon une application particulière les moyens de comparaison d'empreintes délivrent une liste de documents suspects retenus avec un degré de pertinence par rapport à des documents sensibles et les moyens de traitement d'alertes délivrent les références d'un document intercepté lorsque le degré de pertinence de ce document est supérieur à un seuil prédéterminé.

Le système d'interception peut en outre comprendre, entre lesdits moyens de comparaison d'empreintes et lesdits moyens de traitement d'alertes, un module de calcul de similarité entre documents qui comprend :

(a) des moyens de production d'une onde d'interférence représentant le résultat d'appariement entre un vecteur de concepts pris dans un ordre donné définissant l'empreinte d'un document sensible et un vecteur de concepts pris dans un ordre donné définissant l'empreinte d'un document intercepté suspect, et

(b) des moyens de production d'un vecteur d'interférence à partir de ladite onde d'interférence permettant de déterminer un score de ressemblance entre le document sensible et le document intercepté suspect considérés, les moyens de traitement d'alertes délivrant les références d'un document intercepté suspect lorsque la valeur du score de ressemblance de ce document est supérieure à un seuil prédéterminé.

De façon alternative, le système d'interception comprend en outre, entre, entre lesdits moyens de comparaison d'empreintes et lesdits moyens de traitement d'alertes, un module de calcul de similarité entre documents qui comprend des moyens de production d'un vecteur de corrélation représentant le degré de corrélation entre un vecteur de concepts pris dans un ordre donné définissant l'empreinte d'un document sensible et un vecteur de concepts pris dans un ordre donné définissant l'empreinte d'un document intercepté suspect, le vecteur de corrélation permettant de déterminer un score de ressemblance entre le document sensible et le document intercepté suspect considérés, les moyens de traitement d'alertes délivrant les références d'un document intercepté suspect lorsque la valeur du score de ressemblance de ce document est supérieure à un seuil prédéterminé.

D'autres caractéristiques et avantages de l'invention ressortiront de la description suivante de modes particuliers de réalisation, faite en référence aux dessins annexés sur lesquels :

- la Figure 1 est un schéma-bloc illustrant le principe général de la constitution d'un système d'interception de documents multimédias selon l'invention,
- les Figures 2 et 3 sont des vues schématiques illustrant le processus d'interception et de traitement de paquets mis en oeuvre par l'invention lors de l'interception de documents multimédias,
- la Figure 4 est un schéma-bloc montrant les différents modules d'un exemple de système global d'interception de documents multimédias selon l'invention,
- la Figure 5 illustre les différentes étapes d'un processus de confinement de documents sensibles pouvant être mis en oeuvre selon l'invention,
- la Figure 6 est un schéma-bloc d'un exemple de système d'interception selon l'invention montrant le traitement d'alertes et la génération de rapports dans un cas où des requêtes sont générées pour interroger des sites suspects et détecter des documents suspects,

- la Figure 7 est un schéma montrant les différentes étapes d'un processus d'interception selon le système de la Figure 6,
- la Figure 8 est un schéma-bloc montrant le processus de production d'un dictionnaire de concepts à partir d'une base de documents,
- la Figure 9 est un organigramme montrant les différentes étapes de traitement et de partitionnement d'une image avec établissement des vecteurs caractérisant la distribution spatiale de composantes iconiques d'une image,
- la Figure 10 montre un exemple de partitionnement d'une image et de création d'un vecteur caractéristique de cette image,
- la Figure 11 montre une rotation de 90° de l'image partitionnée de la Figure 10 et la création d'un vecteur caractéristique de cette image,
- la Figure 12 montre le principe de construction d'une base de concepts à partir de termes,
- la Figure 13 est un schéma bloc montrant le processus de structuration d'un dictionnaire de concepts,
- la Figure 14 montre la structuration d'une base d'empreintes,
- la Figure 15 est un organigramme montrant les différentes étapes de construction d'une base d'empreintes,
- la Figure 16 est un organigramme montrant les différentes étapes d'identification de documents,
- la Figure 17 est un organigramme montrant la sélection d'une première liste de réponses,
- les Figures 18 et 19 montrent deux exemples d'ondes d'interférence ; et
- les Figures 20 et 21 montrent deux exemples de vecteurs d'interférence correspondant respectivement aux exemples d'ondes d'interférence des figures 18 et 19.

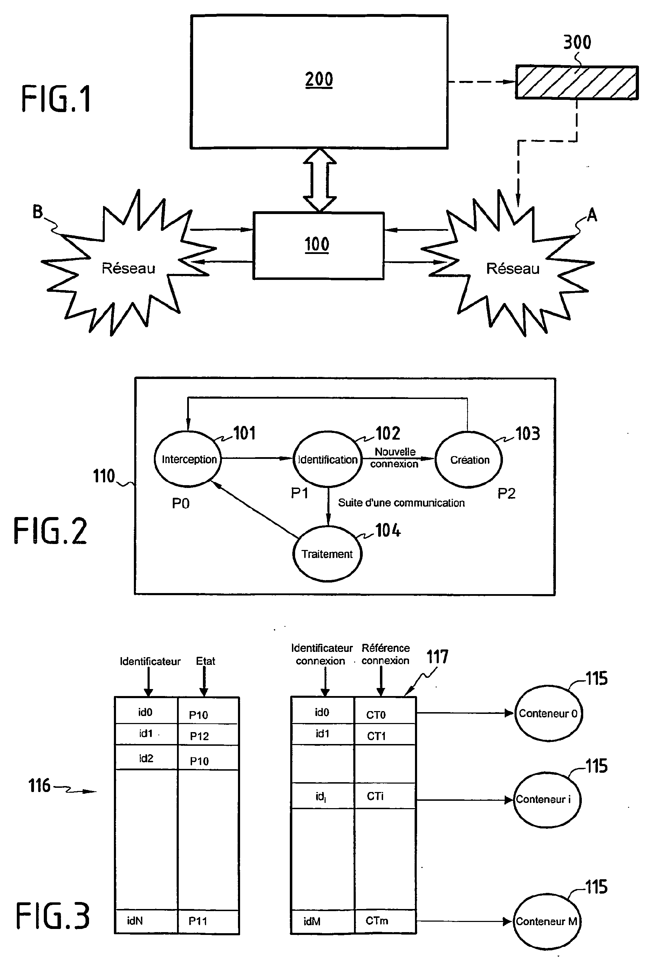

Le système d'interception de documents multimédias diffusés à partir d'un premier réseau A comprend un module principal 100 qui comprend lui-même un module 110 d'interception et de traitement de paquets d'informations comportant chacun un en-tête d'identification et un corps de données. Le module 110 d'interception et de traitement d'informations est ainsi un module de bas niveau, qui est lui-même associé à des moyens 111 d'analyse du contenu de données, de reconnaissance de protocole et de reconstitution des documents interceptés (Fig. 1, 4 et 6).

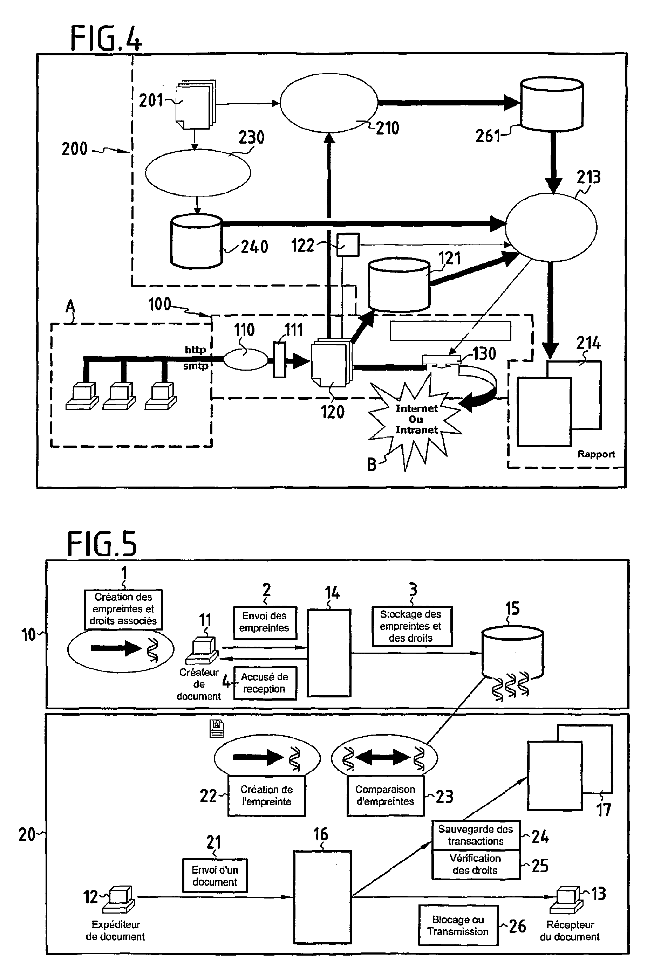

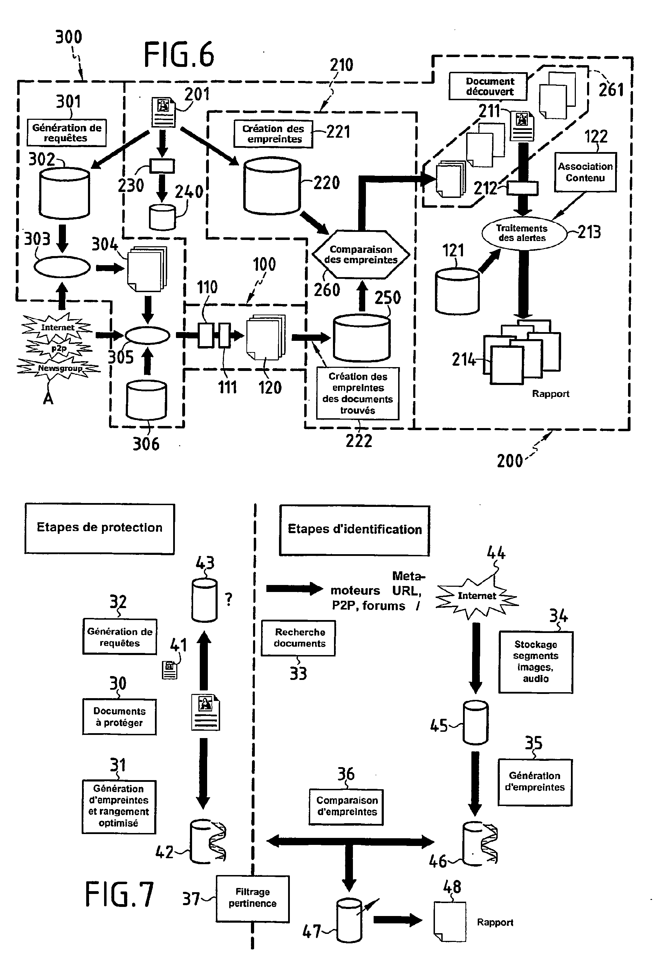

Les moyens 111 fournissent les informations relatives aux documents interceptés d'une part à un module 120 de stockage du contenu des documents interceptés et d'autre part à un module 121 de stockage des informations contenant au moins l'émetteur et le destinataire des documents interceptés (Fig. 4 et 6).

Le module principal 100 coopère avec un système centralisé 200 destiné à permettre la production d'alertes contenant les références des documents interceptés correspondant à des documents sensibles identifiés au préalable.

Suite à l'intervention du système centralisé 200, le module principal 100 peut le cas échéant, par l'intermédiaire de moyens 130, bloquer de façon sélective la transmission, vers un deuxième réseau B, de documents interceptés identifiés comme correspondant à des documents sensibles (Fig. 4).

Un générateur de requêtes 300 permet le cas échéant d'assurer une fouille du premier réseau A à partir de requêtes produites à partir de documents sensibles à surveiller, afin d'identifier des fichiers suspects issus du premier réseau A (Fig. 1 et 6).

Ainsi, dans un système d'interception selon l'invention, on retrouve dans un module principal 100 des activités d'interception et de blocage de protocoles réseaux à la fois à un bas niveau puis à un haut niveau avec une fonction d'interprétation des contenus. Ce module principal 100 se situe dans une position entre les réseaux A et B qui lui permet l'interception active ou passive avec une fonction éventuelle de blocage, selon les configurations et la coopération avec des réseaux de type Intranet ou Internet.

Le système centralisé 200 regroupe différentes fonctions qui seront détaillées plus loin, de gestion de droits, de calcul d'empreintes de documents, de comparaison et de prise de décision.

Le générateur de requêtes 300 est optionnel pour certaines applications et peut inclure en particulier la génération de requêtes P2P ("point à point").

On citera ci-dessous quelques exemples d'applications du système d'interception selon l'invention :

Le réseau A peut être constitué par un réseau de type Internet sur lequel il est procédé à une fouille par exemple de type HTML ou P2P active tandis que les documents sont reçus sur un réseau B Intranet.

Le réseau A peut être également constitué par un réseau de type Internet sur lequel on procède à une écoute P2P passive au niveau du système d'interception, les informations étant retransmises sur un réseau B du même type Internet.

Le réseau A peut encore être constitué par un réseau d'entreprise du type Intranet sur lequel le système d'interception peut opérer le cas échéant le blocage total de certains documents identifiés comme correspondant à des documents sensibles, ces documents n'étant alors pas retransmis vers un réseau externe B de type Internet.

Les premier et deuxième réseaux A et B peuvent encore être constitués tous deux par des réseaux de type Intranet pouvant appartenir à la même entreprise, le système d'interception pouvant assurer un blocage sélectif des documents entre la partie A du réseau d'entreprise et la partie B de ce réseau.

L'invention peut être mise en oeuvre avec tout un ensemble de protocoles standards tels que notamment HTTP, SMTP, FTP, POP, IMAP, TELNET, P2P.

On rappellera à titre d'exemple le fonctionnement des protocoles P2P.

Les échanges P2P se font au moyen d'ordinateurs, dénommés noeuds, qui partagent des contenus et les descriptions de ces contenus avec leurs voisins.

Un échange P2P s'effectue souvent sur le mode suivant :

- Une requête est émise par un noeud U,
- Cette requête est transmise de voisins en voisins au sein de la structure en suivant les règles de chaque protocole P2P spécifique,
- Lorsqu'un noeud D est à même de répondre à la requête r, il envoie un message de réponse R à destination du noeud émetteur U. Ce message contient des informations relatives au chargement d'un contenu C. Ce message R prend fréquemment un chemin similaire à celui par lequel il est venu.
- Lorsque différentes réponses R sont arrivées sur le noeud U, celui-ci décide (l'utilisateur en général) quelle réponse R retenir et il demande ainsi le chargement direct (point-à-point) du contenu C décrit dans la réponse R depuis le noeud D vers le noeud U où il se trouve.

Les requêtes et les réponses R sont pourvues d'une identification qui permet de déterminer quelles sont les réponses R qui correspondent à une requête r donnée.

Le module principal 100 du système d'interception selon l'invention, qui contient les éléments d'interception et de blocage des différents protocoles se situe sur le réseau soit à la place d'un noeud du réseau P2P, soit entre deux noeuds.

Le fonctionnement basique du mécanisme P2P d'interception et de blocages passifs et actifs sera explicité ci-dessous.

L'interception P2P passive consiste à observer les requêtes et les réponses qui passent dans le module 100, en employant cette identification pour retrouver le bon appariement.

Le blocage P2P passif consiste à observer les requêtes qui passent dans le module 100, puis à bloquer dans une mémoire tampon 120, 121 les réponses pour effectuer le tri. Ce tri consiste à employer les réponses pour démarrer le téléchargement de fichier vers le système commun 200 et à demander à celui-ci de comparer ce fichier (ou une partie de ce fichier) par extraction d'empreinte avec la base de documents à protéger. Si la comparaison est positive et indique que le fichier téléchargé correspond à un document protégé, les autorisations de diffusion de ce document protégé sont consultées et une décision est prise qui avertit le module 100 de réémettre la réponse depuis sa mémoire tampon 120, 121, ou de l'effacer ou encore de la remplacer par une réponse "corrigée" : un message de réponse portant l'identification de la requête est émis contenant des informations de téléchargement orientant vers un serveur P2P "ami" (commercial par exemple).

L'interception P2P active consiste à injecter des requêtes d'un côté du réseau A puis de les observer sélectivement au moyen de l'écoute passive.

Le blocage P2P actif consiste à injecter des requêtes d'un côté du réseau A puis de traiter les réponses à ces requêtes au moyen de la méthode décrite dans l'interception passive.

Pour améliorer les performances du mécanisme d'écoute passive, on peut, à partir de la position d'interception que constitue le module 100, agir de plusieurs manières :

- modifier les requêtes que l'on voit transiter, par exemple en augmentant la portée de leur recherche, les réseaux concernés, corrigeant les fautes d'orthographe, etc.
- générer des requêtes copies destinées à dupliquer l'efficacité de la recherche, soit en réexpédiant des copies intégrales décalées dans le temps pour rallonger la recherche, soit en expédiant des copies modifiées de ces requêtes pour augmenter la diversité des réponses (variantes orthographiques, de domaines, de réseaux).

Le système selon l'invention permet aux entreprises en particulier de contrôler la diffusion de leurs propres documents et de stopper la fuite vers l'extérieur des informations confidentielles. Il permet aussi d'identifier les données pertinentes présentes aussi bien à l'intérieur qu'à l'extérieur de l'entreprise. Ces données peuvent être des documents à usage interne ou même des données destinées à la diffusion mais dont l'exploitation doit être en conformité avec le droit d'usage (droit d'auteur, copyright, droit moral,...). Les informations pertinentes peuvent aussi concerner l'environnement extérieur : informations sur la concurrence, les clients, rumeurs autour d'un produit ou d'un événement.

L'invention combine plusieurs approches allant de la caractérisation atomique des contenus à la caractérisation du support et du média de diffusion. Plusieurs modules collaborent pour mener à bien ce processus de traçabilité des contenus. Au sein du système centralisé 200, un module assure la création d'une empreinte digitale unique, caractérisant le contenu de l'oeuvre et permettant de le repérer et de suivre sa trace : c'est une sorte de test d'ADN qui permet, à partir d'un contenu anonyme, de retrouver l'oeuvre originale répertoriée et ainsi de vérifier ses informations légales (auteurs, ayants droits, conditions d'utilisation,...) ainsi que les conditions d'exploitation autorisées. Le module principal 100 permet pour sa part d'automatiser et spécialiser la scrutation et l'identification des contenus sur des supports de diffusion variés (web, web invisible, forums, newsgroups, peer-to peer, chat) pour la recherche d'informations sensibles.

Il permet aussi d'intercepter, d'analyser et d'extraire les contenus diffusés entre deux entités de l'entreprise ou l'entreprise et le monde extérieur. Le système centralisé 200 comprend un module utilisant des techniques de ContentMining et extrait les informations pertinentes de grands volumes de données brutes, puis les range pour les exploiter efficacement.

Avant de revenir plus en détail sur l'architecture générale du système d'interception selon l'invention, on va maintenant décrire en référence aux Figures 2 et 3 le module 110 d'interception et de traitement de paquets d'informations comportant chacun un en-tête d'identification et un corps de données.

On rappelle que dans le monde Internet tous les échanges s'effectuent sous forme d'envoi et de réception de paquets. Ces paquets sont composées de deux partie : l'entête et le corps (données). L'entête contient les informations décrivant le contenu transporté par le paquet telles que le type, le numéro et la longueur du paquet, l'adresse de l'émetteur et du récepteur. Le corps du paquet contient les données proprement dites. Le corps d'un paquet peut être vide.

On peut regrouper les paquets en deux classes : ceux qui servent à assurer le bon fonctionnement du réseau (connaître l'état d'une unité du réseau, connaître l'adresse d'une machine, établir une connexion entre deux machines, ...) et ceux qui servent à transférer des données entre les applications (envoi et réception de courriel, de fichier, de page, ...).

Le transfert d'un document peut nécessiter l'envoi, sur le réseau de plusieurs paquets. Ces paquets peuvent être entrelacés avec des paquets venant d'autres émetteurs. Un paquet peut transiter par plusieurs machines avant d'arriver au destinataire. Les paquets peuvent emprunter des chemins différents et arriver dans le désordre (un paquet envoyé à l'instant t+1 peut arriver avant celui qui est envoyé à l'instant t).

Le transfert de données peut s'effectuer soit en mode connecté soit en mode non connecté. En mode connecté (http, smtp, telnet, ftp, ...) qui s'appuie sur le protocole TCP, le transfert de données est précédé par un mécanisme de synchronisation (établissement de la connexion). L'établissement d'une connexion TCP s'effectue en trois temps (trois paquets)

1) L'appelant (appelé client) envoie SYN (paquet dont le drapeau SYN est positionné dans l'entête qu paquet),
2) Le récepteur (appelé serveur) répond avec SYN et ACK (paquet dont les drapeaux SYN et ACK sont positionnés),
3) L'appelant envoie ACK (paquet dont le drapeau ACK est positionné).

Le client ainsi que le serveur sont identifiés par leurs adresse MAC,IP ainsi que le numéro de port du service en question. On suppose que le client (l'émetteur du premier paquet dont le bit SYN est positionné) a connaissance du couple (adresse IP du récepteur, numéro de port du service souhaité). Dans le cas contraire, il demande au préalable à connaître l'adresse IP du récepteur.

Le module 110 d'interception de documents a pour rôle d'identifier et de regrouper les paquets transportant les données de la même application (http, SMTP, telnet, ftp, ...).

Pour mener à bien cette tâche le module d'interception analyse les paquets des couches IP, des couches transports TCP/UDP et des couches application (http, SMTP, telnet, ftp, ...). L'analyse s'effectue en plusieurs étapes :

- Identification, interception et concaténation des paquets contenant des portions d'un ou des documents échangés pendant une communication que nous appelons aussi connexion lorsqu'il s'agit d'une communication basée sur le protocole TCP. Une connexion est définie par les adresses IP et les numéros de port du client et du serveur et éventuellement par l'adresse Mac du client et du serveur,
- Extraction des données encapsulées dans les paquets qui viennent d'être concaténés.

Comme indiqué dans la Figure 2 l'interception et la fusion des paquets peuvent être modélisées par un automate à 4 états :

P0 : état chargé d'intercepter les paquets diffusés à partir d'un premier réseau A (module 101),

P1 : état chargé d'identifier le paquet intercepté à partir de son en-tête (module 102). En fonction de la nature du paquet, il active l'état P2 (module 103) si le paquet est envoyé par le client pour une demande de connexion. Il invoque P3 (module 104) si le paquet fait partie d'une communication déjà établie.

P2 : l'état P2 (module 103) a pour rôle de créer un identificateur unique qui sert à caractériser la connexion et il crée aussi un conteneur de stockage 115 contenant les ressources nécessaire au stockage et à la gestion des données qui sont produites par l'état P3. A une connexion, il lui associe un triplet *<identificateur, drapeau de l'état de la connexion, conteneur de stockage>.*

P3 : l'état P3 (module 104) a pour rôle de traiter les paquets associés à chaque communication. Pour cela, il détermine l'identificateur du paquet reçu afin d'accéder au conteneur de stockage 115 où il sauvegarde les données présentes dans le paquet.

Comme le montre la figure 3, la procédure d'identification et de fusion de paquets utilise deux tables 116, 117 : une table 116 d'établissement de connexion contenant les connexions qui sont en cours d'établissement et une table 117 d'identification de conteneur contenant la référence des conteneurs des connexions déjà établies.

La procédure d'identification examine l'entête de la trame et crée à chaque détection d'une nouvelle connexion (le bit SYN est positionné uniquement) une entrée dans la table 116 d'établissement de connexion où il stocke le couple identificateur de la connexion et le drapeau *etatConnexion* indiquant l'état de la connexion *<idConnexion, etatConnexion>*. Le drapeau *etatConnexion* prend 3 valeurs possibles (P10, P11et P12) :

*etatConnexion* est positionné à P10 lors de la détection d'une demande de connexion,

*etatConnexion* est positionné à P11 si *etatConnexion* est égal à P10 et l'entête de la trame correspond à une réponse du serveur. Les deux bits ack et sync sont positionnés simultanément.

*etatConnexion* est positionné à P12 si *etatConnexion* est égal à P11 et l'entête de la trame correspond à une confirmation du client. Seul le ACK est positionné.

Le positionnement du drapeau *etatConnexion* à P12 d'un idConnexion implique la suppression dans la table 116 d'établissement de connexion, de l'entrée correspondant à cet idConnexion et la création dans la table 117 d'identification de conteneur d'une entrée contenant le couple *<idConnexion, refConteneur>* où *refConteneur* désigne la référence du conteneur 115 dédié au stockage des données extraites des trames de la connexion *idConnexion,*

L'étape de traitement a pour rôle de récupérer et de stocker dans les conteneurs 115 les données échangées entre les émetteurs et les récepteurs.

Lors de la réception d'une trame on détermine l'identificateur de la connexion *idConnexion* qui permet de localiser grâce à *refConteneur* le conteneur 115 de stockage des données de la trame.

A la fin d'une connexion le contenu de son conteneur est analysé, les différents documents qui le constituent sont stockés dans le module 120 de stockage du contenu des documents interceptés et les informations concernant les destinataires sont stockées dans le module 121 de stockage des informations concernant au moins l'émetteur et le destinataire des documents interceptés.

Le module 111 d'analyse du contenu des données stockées dans les conteneurs 125 permet de reconnaître le protocole utilisé parmi un ensemble de protocoles standards tels que notamment http, SMTP, ftp, POP, IMAP, TELNET, P2P, et de reconstituer des documents interceptés.

On notera que le module 101 d'interception des paquets, le module 102 d'analyse de l'en-tête des paquets, le module 103 de création d'un automate, le module 104 de traitement de paquets et le module 111 d'analyse du contenu des données stockées dans les conteneurs 115 fonctionnent de façon autonome et asynchrone.

Ainsi, le module 110 d'interception de documents est une application de la couche réseau, qui intercepte les trames de la couche transport (protocole de commande de transmission (TCP) et protocole de datagramme utilisateur (UDP)) et des paquets du protocole Internet (IP) et, en fonction des applications surveillées, les traite et les fusionne pour reconstituer les contenus ayant transité sur le réseau.

Le système d'interception selon l'invention, avec son système centralisé 200, peut conduire à plusieurs applications qui toutes ont trait à la traçabilité de contenus numériques de documents multimédias.

Ainsi, l'invention permet de repérer les diffusions illicites sur les supports de diffusion Internet (Net, P2P, newsgroup,...) et Intranet (sites et publications à l'intérieur de l'entreprise), ou d'identifier et de stopper toute tentative de diffusion illicite (non conforme au périmètre de confinement d'un document) d'une machine à une autre, ou encore de veiller à ce que les opérations (publication, modification, édition impression, etc.) effectuées sur les documents d'un système collaboratif (système de traitement de l'information destiné à un groupe d'utilisateurs) soient autorisées, c'est-à-dire conformes aux règles établies par l'entreprise. Il empêche par exemple la publication d'un document dans une rubrique dont un des membres n'a pas le droit de consulter le document.

Le système selon l'invention a un coeur technologique commun basé autour de la production, de la comparaison d'empreintes et de la génération d'alertes. Les applications se distinguent, d'une part, par l'origine des documents reçus en entrée et, d'autre part, par la manière dont les alertes engendrées lors de l'identification d'un document illicite sont traitées. Lors de traitement d'alertes il peut être produit des rapports décrivant les usages illicites des documents provoquant ces alertes ou un blocage des diffusions illicites de ces documents. La publication d'un document dans un groupe de travail peut aussi être interdite si un des membres du groupe n'est pas autorisé à exploiter (lire, écrire, imprimer,...) le document.

Si l'on se reporte à la Figure 6, on voit que le système centralisé 200 comprend un module 221 de fabrication d'empreintes de documents sensibles à surveiller 201, un module 222 de fabrication d'empreintes de documents interceptés, un module 220 de stockage des empreintes fabriquées à partir des documents sensibles à surveiller 201, un module 250 de stockage des empreintes fabriquées à partir des documents interceptés, un module 260 de comparaison d'empreintes issues des modules de stockage 250 et 220 et un module 213 de traitement d'alertes contenant les références des documents interceptés 211 correspondant à des documents sensibles.

Un module 230 permet d'associer à chaque document sensible à surveiller 201 des droits définissant les conditions d'exploitation du document et un module 240 de stockage des informations relatives à ces droits.

Par ailleurs, un générateur de requêtes 300 peut comprendre un module 301 de production de requêtes à partir des documents sensibles à surveiller 201, un module 302 de stockage des requêtes produites, un module 303 de fouille du réseau A à l'aide d'un ou plusieurs moteurs de recherche utilisant les requêtes précédemment stockées, un module 304 de stockage de références de fichiers suspects issus du réseau A et un module 305 d'aspiration des fichiers suspects référencés dans le module 304 de stockage de références. Il peut être également procédé dans le module 305 à une aspiration du voisinage des fichiers suspects ou à l'aspiration d'une série de sites prédéterminés dont les références sont stockées dans un module 306 de stockage de références.

Selon l'invention, on peut ainsi procéder à une fouille automatisée d'un réseau pour la détection d'oeuvres protégées par le droit d'auteur, en fournissant un bilan régulier des oeuvres trouvées sur des sites Intranet, Internet, les réseaux P2P (peer-to-peer), des newsgroups et des forums. La traçabilité des oeuvres est assurée d'après leurs originaux, sans marquage préalable.

Des rapports 214 envoyés à une fréquence choisie apportent les informations pertinentes et les documents utiles à l'accumulation de données sur les modes d'utilisation (licites ou illicites) des oeuvres de référence. Une recherche ciblée et une reconnaissance automatique fiable des oeuvres d'après leur contenu assurent la qualité des résultats.

La Figure 7 résume, dans le cas des sites web, le processus de protection et d'identification d'un document. Il est constitué de deux phases :

Phase de protection

Cette phase s'effectue en deux étapes

Etape 31: Génération de l'empreinte des documents à protéger 30, association à cette empreinte d'un droit d'usage (descriptif du document, propriétaire, lecture, écriture, période,...) et stockage de ces informations dans une base 42. Etape 32 : Génération des requêtes 41 qui sont utilisées pour identifier les sites suspects et sont stockées dans une base 43.

Phase d'identification

Etape 33 : Aspiration et décomposition des pages des sites :

- Utilisation des requêtes générées dans l'étape 32 pour récupérer sur le réseau 44 les adresses des sites susceptibles de contenir des données protégées par le système. Les informations concernant les sites identifiés sont stockées dans une base des sites suspects.
- Aspiration et décomposition des pages des sites référencés dans la base des sites suspects et dans une base qui est alimentée par les utilisateurs et contient les références des sites dont on souhaite surveiller le contenu (Etape 34). Les résultats sont stockés dans la base des contenus suspects 45 qui est constituée de plusieurs sous bases, chacune ayant un type particulier de contenu.

Etape 35: Génération des empreintes des contenus de la base 45 Etape 36: Comparaison de ces empreintes avec les empreintes de la base 42 et génération des alertes stockées dans une base 47 Etape 37: traitement des alertes et production des rapports 48. Le traitement des alertes utilise la base d'association de contenus pour générer le rapport. Elle contient les relations entre les différents composants du système (les questions, les contenus, l'adresse des contenus (site, adresse de la page, adresse locale,...), le moteur qui a identifié la page, ...).

Le système d'interception selon l'invention peut également être intégré dans une application qui permet la mise en place d'un processus d'embargo mimant l'emploi d'un tampon "diffusion restreinte" qui valide l'autorisation de diffusion de documents au sein d'un groupe restreint d'utilisateurs spécifiques parmi un ensemble plus large d'utilisateurs échangeant des informations, cette restriction devant pouvoir être supprimée à partir d'une certaine échéance si nécessaire.

Dans ce cas, l'embargo est automatique et s'applique à la totalité des documents manipulés au sein de l'ensemble plus large qui constitue un système collaboratif. Le système découvre pour tout document Y en attente d'être publié si celui-ci est ou contient une partie d'un document Z déjà publié et si les droits associés à cette publication de Z sont compatibles avec ceux que l'on tente d'associer à Y.

Un tel processus d'embargo va être décrit ci-dessous.

Lorsqu'un utilisateur souhaite publier un document, le système doit dans un premier temps déterminer si ce document contient tout ou partie d'un document déjà publié et déterminer les droits afférents si tel est le cas.

Le processus met ainsi en jeu les étapes suivantes :

Etape 1 : Génération d'une empreinte E pour le document C, association à cette empreinte de la date D de la requête ainsi que l'utilisateur U ayant fait la demande, ainsi que la nature N précise de la demande (courriel, publication générale, mémo, etc...).

Etape 2 : comparaison de cette empreinte E avec celles déjà présentes dans une base AINBase qui contient l'empreinte de chaque document déjà enregistré, munie des informations suivantes :

- utilisateur ayant fait la publication : U2
- droits associés à cette publication (par exemple groupe de travail auquel ce document appartient, groupes de travail qui ont le droit de le lire, groupes de travail qui ont le droit de le modifier, etc.) : G
- date limite de validité du tampon : DV

Etape 3 : SI l'empreinte E est similaire à une empreinte F déjà présente dans la base AINBase, on compare les droits associés à F avec les informations collectées à l'étape 1. Deux cas se présentent :

SI (D<=DV) ET (U n'appartient pas à G) ALORS
les droits, le statut de l'utilisateur ne sont pas compatibles et si la date de publication est antérieure à la fin de validité, le système rejette la demande :

l'empreinte E n'est pas insérée dans la AINBase,
le document C n'est pas inséré dans la base de documents du système collaboratif,
une exception X est déclenchée.

SINON :

les droits et le statut de l'utilisateur sont compatibles, alors le document sera accepté. Si aucun droit n'a déjà été associé avec ce contenu, l'utilisateur qui le publie deviendra l'utilisateur-référent de ce document. Il pourra mettre en place son propre système d'embargo:

1. l'empreinte E est insérée dans la AINBase,
2. le document C est inséré dans la base de documents du système collaboratif,

La comparaison de la date peut permettre de mettre fin à un embargo de manière automatisée dès que la date du jour dépasse la date limite de l'embargo définie au départ, ce qui a pour effet de neutraliser les contraintes correspondantes de publication, modification, etc. sur le document.

La Figure 4 montre de façon synthétique un système d'interception selon l'invention qui permet de stopper toute tentative de diffusion de documents non conformes au droit d'usage des documents.

Une diffusion non conforme peut correspondre dans cet exemple soit à l'envoi d'un document non autorisé à quitter son unité de confinement, soit à l'envoi d'un document à une personne non autorisée à recevoir le document, soit à la réception d'un document présentant un caractère particulier, protégé par le droit d'auteur par exemple.

Le système d'interception selon l'invention comprend un module principal 100 qui est chargé de contrôler le contenu interchangé entre deux brins A et B de réseaux (Internet ou Intranet). Pour cela, les paquets entrants et sortants sont interceptés et mis en correspondance afin de déterminer la nature de la communication, et de reconstituer le contenu des documents échangés durant une communication. La mise en correspondance des trames permet de déterminer la machine qui a l'initiative de la communication, de connaître le protocole utilisé, d'associer à chaque contenu intercepté sa finalité (son émetteur, ses destinataires du contenu, la nature de l'opération :"get", "post", "put", "send"...). L'émetteur comme les destinataires peuvent être des personnes physiques, des machines, ou tout type de référence permettant de localiser un contenu. Parmi les finalités traitées on trouve :

1. Envoi d'un courriel d'une émetteur vers un ou plusieurs destinataires,

2. Demande de téléchargement d'une page web ou d'un fichier,

3. Envoi d'un fichier ou d'une page web en utilisant des protocoles de type http, ftp ou p2p par exemple.

Lors de l'interception d'une finalité d'envoi ou de téléchargement d'une page web ou d'un fichier, la finalité en question est sauvegardée en attendant que la page ou le fichier en question soit intercepté puis traité. Si le contenu intercepté contient des documents sensibles, une alerte est produite contenant toutes les informations utiles (les correspondants, les références des documents protégés, ce qui permet au système de traitement des alertes différentes actions :

1. Tracer les contenus et superviser les procédures d'accès aux contenus,

2. Produire des rapports sur les échanges (statistiques, etc.),

3. Bloquer si nécessaire la transmission associée à des finalités non conformes.

Le système d'interception chargé de contrôler le contenu des documents diffusés par le réseau A et d'interdire la diffusion ou la transmission à des destinataires ou groupes de destinataires non autorisés à recevoir le document sensible comprend essentiellement un module principal 100 avec un module d'interception 110 chargé de récupérer et de décomposer les contenus qui transitent ou qui sont présents sur les réseaux de diffusion A. Les contenus sont analysés afin d'en extraire les documents constituant le contenu intercepté. Les résultats sont stockés dans :

- le module de stockage 120 qui stocke les documents extraits des contenus intercepté,
- le module de stockage 121 contenant les associations entre les documents extraits, les contenus interceptés et la finalité : les destinataires des contenus interceptés, et, le cas échéant,
- le module de stockage 122 contenant des informations relatives aux composantes résultant d'une dissection des documents interceptés.

Un module 210 est chargé de produire des alarmes signalant qu'un contenu intercepté contient une partie d'un ou de plusieurs documents sensibles. Ce module 210 est composé essentiellement de deux modules :

- le module 221, 222 chargé de fabriquer les empreintes des documents sensibles et des documents interceptés (voir Figure 6),
- le module 260 confronte les empreintes des documents interceptés avec celles de la base des documents sensibles et produit des alertes contenant les références des documents sensibles qui font partie des documents interceptés. Les résultats en sortie du module 250 sont stockés dans une base 261.

Un module 230 permet d'associer à chaque document les droits définissant les conditions d'exploitation du document. Les résultats du module 230 sont stockés dans la base 240.

Le module 213 est chargé de traiter les alertes et de produire les comptes rendus 214. En fonction de la politique adoptée, le module 213 peut bloquer la circulation du document contenant des éléments sensibles, par l'intermédiaire du module 130 de blocage ou retransmission vers un réseau B.

Une alerte est composée de la référence, dans le module de stockage 120 du contenu du document intercepté qui a provoqué l'alerte et des références de documents sensibles qui sont source de l'alerte. A partir de ces références et des informations enregistrées dans les bases 240 et 121, le module 213 décide de donner suite ou non à l'alerte. L'alerte est prise en compte si le destinataire du contenu n'est pas déclaré, dans la base 240, parmi les exploitants du document sensible qui est source de l'alerte.

La prise en compte d'une alerte provoque la non transmission du contenu et la production du rapport 214 signalant les raisons du blocage. Ce rapport est archivé, un compte rendu est envoyé en temps réel aux responsables et, en fonction de la politique adoptée, l'émetteur est averti par un message électronique par exemple. Les contenus du module de stockage 120 qui n'ont pas provoqué d'alerte ou dont les alarmes ont été ignorées sont remis en circulation par le module 130.

La Figure 5 résume le fonctionnement du processus d'interception et de blocage de documents sensibles à l'intérieur des périmètres d'exploitation définis par l'entreprise. Ce processus comprend une première partie 10 correspondant à l'enregistrement pour le confinement et une deuxième partie 20 correspondant à l'interception et au blocage.

Le processus d'enregistrement pour le confinement comprend une étape 1 de création des empreintes et des droits associés, identifiant le périmètre de confinement (propriétaires, groupes d'utilisateurs). Depuis le poste 11 de création de document, une étape 2 consiste en l'envoi des empreintes vers un serveur mandataire 14, puis une étape 3 réside dans le stockage des empreintes et des droits dans une base d'empreintes 15. Une étape 4 correspond à l'envoi d'un accusé de réception par le serveur mandataire 14 vers le poste 11.

Le processus d'interception et de blocage comprend éventuellement les étapes suivantes :

Etape 21 d'envoi d'un document depuis un poste 12 d'expédition de documents.
Etape d'interception, au niveau du module d'interception 16, du document quittant les brins du réseau à surveiller.

Etape 22 de création d'empreinte du document récupéré.

Etape 23 de comparaison d'empreintes en liaison avec la base 15 et le module d'interception 16 pour générer des alertes signalant la présence d'un document sensible dans les contenus interceptés.

Etape 24 de sauvegarde des transactions dans une base 17.

Etape 25 de vérification des droits.

Etape 26 de blocage ou transmission vers un poste 13 de réception de documents, selon que le document intercepté est autorisé ou non à quitter le périmètre de confinement.

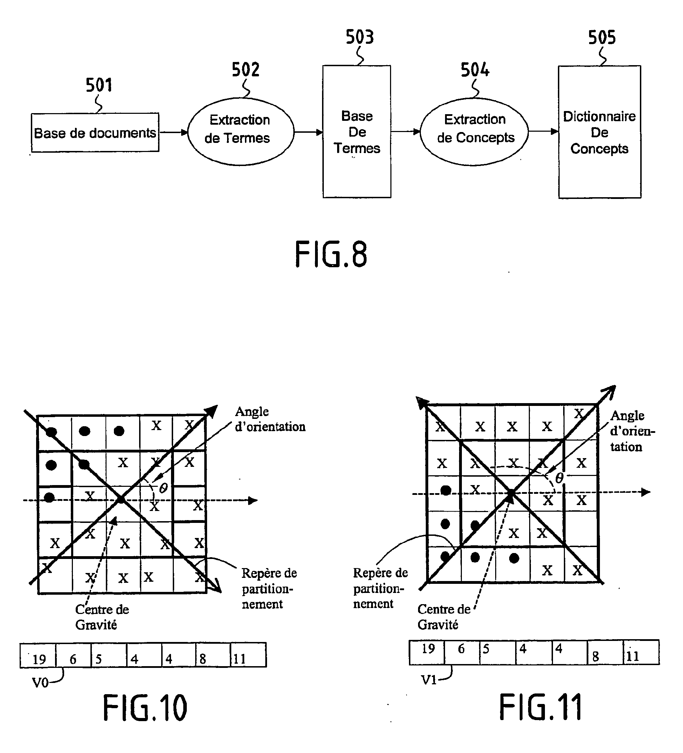

On décrira maintenant en référence aux Figures 8 et 12 à 15 le principe général d'un procédé d'indexation de documents multimédias selon l'invention, qui conduit à la construction d'une base d'empreintes, chaque document indexé étant associé à une empreinte qui lui est propre.

A partir d'une base de documents multimédias 501, une première étape 502 consiste en l'identification et l'extraction, pour chaque document, de termes $t_i$ constitués par des vecteurs caractérisant des propriétés du document à indexer.

A titre d'exemple, il est possible d'identifier et d'extraire des termes $t_i$ pour un document sonore.

Un document audio est d'abord décomposé en trames qui sont regroupées par la suite en clips dont chacun va être caractérisé par un terme constitué par un vecteur de paramètres. Un document audio sera donc caractérisé par un ensemble de termes $t_i$ qui seront stockés dans une base de termes 503 (Figure 8).

Les documents audio dont on a extrait leur vecteur caractéristique peuvent être échantillonnés par exemple à 22 050 Hz afin d'éviter l'effet de crénelage. Le document est ensuite divisé en un ensemble de trames dont le nombre d'échantillons par trame est fixé en fonction du type de fichier à analyser.

Pour un document audio riche en fréquences et qui contient beaucoup de variations, comme les films par exemple, les émissions de variétés ou encore les émissions sportives, le nombre d'échantillons dans une trame doit être faible, de l'ordre de 512 échantillons par exemple. En revanche, pour un document audio homogène ne contenant que de la parole ou de la musique par exemple, ce nombre doit être important, par exemple de l'ordre de 2 048 échantillons.

Un clip de document audio peut être caractérisé par différents paramètres servant à constituer les termes et caractérisant les informations temporelles (comme l'énergie ou le taux d'oscillation par exemple) ou fréquentielles (comme la largeur de bande par exemple).

On a considéré ci-avant le cas de documents multimédias comportant des composantes audio.

Dans le cas de l'indexation de documents multimédias comportant des signaux vidéo, on peut choisir des termes $t_i$ constitués par des images-clés représentant des groupes d'images homogènes consécutives.

Les termes $t_i$ peuvent à leur tour représenter par exemple les couleurs dominantes, les propriétés texturales, les structures de zones dominantes des images-clés du document vidéo.

D'une manière générale, dans le cas des images qui sera développé plus en détail plus loin, les termes peuvent représenter les couleurs dominantes, les propriétés texturales, les structures des zones dominantes de l'image. Plusieurs procédés peuvent être mis en oeuvre de façon alternative ou cumulative, aussi bien sur la totalité de l'image que sur des portions de l'image, pour déterminer les termes $t_i$ devant caractériser l'image.

Dans le cas d'un document contenant du texte, les termes $t_i$ peuvent être constitués par des mots du langage parlé ou écrit, par des nombres et par d'autres identificateurs constitués de combinaisons de caractères (par exemple des combinaisons de lettres et de chiffres).

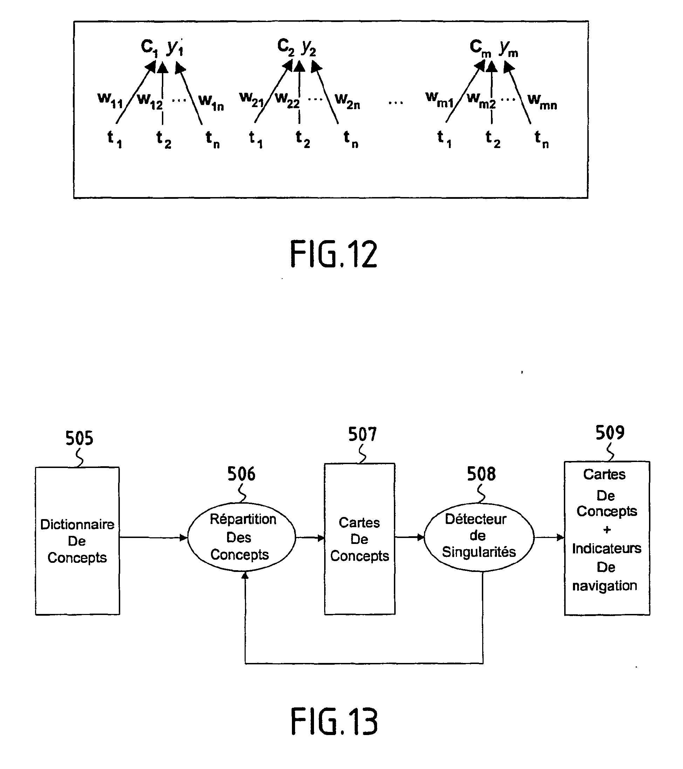

Si l'on se reporte à nouveau à la Figure 8, à partir d'une base de termes 503 comprenant P termes, on procède dans une étape 504 à un traitement des termes $t_i$ et à leur regroupement en concepts $c_i$ (Figure 12) destinés à être stockés dans un dictionnaire de concepts 505. Il s'agit ici d'élaborer un ensemble de signatures caractérisant une classe de documents. Les signatures sont des descripteurs qui, par exemple dans le cas de l'image, représentent la couleur, la forme et la texture. Un document peut alors être caractérisé et représenté par les concepts du dictionnaire.

Une empreinte d'un document peut alors être formée par les vecteurs signatures de chaque concept du dictionnaire 5. Le vecteur signature est constitué par les documents où le concept $c_i$ est présent ainsi que par les positions et le poids de ce concept dans le document.

Les termes $t_i$ extraits d'une base de documents 501 sont stockés dans une base de termes 503 et traités dans un module 504 d'extraction de concepts $c_i$ qui sont eux-mêmes regroupés dans un dictionnaire de concepts 505. La Figure 12 illustre le processus de construction d'une base de concepts $c_i$ ($1 \leq i \leq m$) à partir de termes $t_j$ ($1 \leq j \leq n$) présentant des scores de similarité $w_{ij}$.

Le module de la production du dictionnaire de concepts reçoit en entrée l'ensemble P des termes de la base 503 et le nombre maximum N de concepts souhaité est fixé par l'utilisateur. Chaque concept $c_i$ est prévu pour regrouper tous les termes voisins du point de vue de leurs caractéristiques.

Pour produire le dictionnaire de concepts, on commence par calculer la matrice de distance T entre les termes de la base 503, cette matrice est utilisée pour créer une partition dont le cardinal est égal au nombre N de concepts souhaité.

La création du dictionnaire de concepts s'effectue en deux phases :

Décomposition de $P$ en $N$ parties $P = P_1 \cup P_2 ... \cup P_N$

Processus d'optimisation de la partition qui décompose $P$ en $M$ classes

$P = C_1 \cup C_2 ... \cup C_M$ avec $M$ est inférieur ou égal à $P$.

Le processus d'optimisation a pour but de réduire l'erreur de la répartition de $P$ en $N$ parties $\{P_1, P_2, ..., P_N\}$ où chaque partie $P_i$ est représentée par le terme $t_i$ qui sera pris comme concept, l'erreur commise est alors égale à l'expression suivante :

$$\varepsilon = \sum_{i=1}^{N} \varepsilon_{t_i} , \quad \varepsilon_{t_i} = \sum_{t_j \in P_i} d^2 (t_i, t_j)$$ est l'erreur commise lorsqu'on remplace les termes $t_j$ de $P_i$ par $t_i$.

On peut décomposer P en N parties de manière à répartir les termes de telle façon que les termes les plus éloignés se trouvent dans des parties distinctes et les termes proches se trouvent dans la même partie.

On décrira d'abord l'étape 1 de décomposition de l'ensemble de termes P en deux parties $P_1$ et $P_2$ :

(a) On détermine les deux termes les plus éloignés $t_i$ et $t_j$ de $P$ correspondant à la plus grande distance $D_{ij}$ de la matrice $T$.

(b) Pour chaque $t_k$ de $P$, $t_k$ est affecté à $P_1$ si la distance $D_{ki}$ est plus petite que la distance $D_{kj}$ et à $P_2$ sinon.

On itère l'étape 1 jusqu'à l'obtention du nombre de parties souhaité. A chaque itération on applique les étapes (a) et (b) sur les termes de l'ensemble P1 et de l'ensemble P2.

On décrira maintenant une phase d'optimisation.

Le processus d'optimisation a pour point de départ les N parties disjointes de P $\{P_1, P_2, ..., P_N\}$ ainsi que les N termes $\{t_1, t_2, ..., t_N\}$ qui les représentent et il est utilisé afin de réduire l'erreur de décomposition de P en $\{P_1, P_2, ..., P_N\}$ parties.

On commence par calculer les centres de gravités Ci des Pi. Ensuite on calcule l'erreur $$\varepsilon c_i = \sum_{t_j \in P_i} d^2 (t_i, t_j)$$ qu'on compare à $\varepsilon c_i$ et on remplace ti par Ci si $\varepsilon c_i$ est inférieur à $\varepsilon t_i$. Puis, après avoir calculé la nouvelle matrice T et si la convergence n'est pas atteinte , on procède à une décomposition. La condition d'arrêt est définie par $$\frac{(\varepsilon c_t - \varepsilon c_{t+1})}{\varepsilon c_t} < seuil$$ qui est de l'ordre de $10^{-3}$. $\varepsilon c_t$ étant l'erreur commise à l'instant t qui représente l'itération.

On présente ci-dessous une matrice T de distances entre les termes, où $D_{ij}$ désigne la distance entre le terme $t_i$ et le terme $t_j$.

|  | $t_0$ |  | $t_i$ |  | $t_k$ |  | $t_j$ |  | $t_n$ |
|---|---|---|---|---|---|---|---|---|---|
| $t_0$ | $D_{00}$ |  | $D_{0i}$ |  | $D_{0k}$ |  | $D_{0j}$ |  | $D_{0n}$ |
|  |  |  |  |  |  |  |  |  |  |
| $t_i$ | $D_{i0}$ |  | $D_{il}$ |  | $D_{ik}$ |  | $D_{ij}$ |  | $D_{in}$ |
|  |  |  |  |  |  |  |  |  |  |
| $t_k$ | $D_{k0}$ |  | $D_{ki}$ |  | $D_{kk}$ |  | $D_{kj}$ |  | $D_{kn}$ |
|  |  |  |  |  |  |  |  |  |  |
| $t_j$ | $D_{j0}$ |  | $D_{jl}$ |  | $D_{jk}$ |  | $D_{jj}$ |  | $D_{jn}$ |
|  |  |  |  |  |  |  |  |  |  |
| $t_n$ | $D_{n0}$ |  | $D_{ni}$ |  | $D_{nk}$ |  | $D_{nj}$ |  | $D_{nn}$ |

La Figure 13 illustre, dans le cas de documents multimédias de contenus divers, un exemple de structuration du dictionnaire de concept 505.

Afin de faciliter la navigation à l'intérieur du dictionnaire 505 et de déterminer rapidement lors d'une phase d'identification le concept le plus proche d'un terme donné, le dictionnaire 505 est analysé et une carte de navigation 509 à l'intérieur du dictionnaire est établie.

La production de la carte de navigation 509 s'effectue de façon itérative. A chaque itération, on commence par scinder l'ensemble de concepts en deux sous-ensembles, puis à chaque itération on sélectionne un sous-ensemble jusqu'à l'obtention du nombre de groupes souhaité ou bien jusqu'à ce que le critère d'arrêt soit satisfait. Ce critère d'arrêt peut être par exemple que les sous-ensembles obtenus sont tous homogènes avec un écart-type faible par exemple. Le résultat final est un arbre binaire où les feuilles contiennent les concepts du dictionnaire et les noeuds de l'arbre contiennent les informations nécessaires à la scrutation de l'arbre lors de la phase d'identification d'un document.

On décrira ci-dessous un exemple de module 506 de répartition d'un ensemble de concepts.

L'ensemble de concepts C est représenté sous la forme d'une matrice $M = [c_1, c_2, ....., c_N] \in \Re^{P*N}$, avec $c_i \in \Re^P$, où $c_i$ représente un concept de $p$ valeurs. Différentes méthodes sont possibles pour assurer une répartition axiale. Dans ce cas, on commence par calculer le centre de gravité C ainsi que l'axe utilisé pour décomposer l'ensemble en deux sous-ensembles.

Les étapes de traitement sont les suivantes :

Étape 1 : on calcule un représentant de la matrice M tel que le centroïde $w$ de la matrice $M$ :

$$w = \frac{1}{N} \sum_{i=1}^{N} c_i \qquad (13)$$

Étape 2 : on calcule la matrice de covariance $\tilde{M}$ entre les éléments de la matrice M et le représentant de la matrice M avec, dans le cas particulier ci-dessus

$$\tilde{M} = M - we, \text{ où } e = [1,1,1,...,1] \qquad (14)$$

Étape 3 : on calcule un axe de projection des éléments de la matrice M, par exemple le vecteur propre U associé à la plus grande valeur propre de la matrice de covariance.

Étape 4: on calcule la valeur pi = $u^T (c_i - w)$ et on décompose l'ensemble de concepts C en deux sous-ensembles C1 et C2 de la manière suivante :

$$\begin{cases} c_i \in C1 & si \ pi \leq 0 \\ c_i \in C2 & si \ pi > 0 \end{cases} \qquad (15)$$

Les informations stockées dans le noeud associé à C sont {u, w, |p1|, p2} avec p1 est le maximum de tous les $pi \leq 0$ et p2 est le minimum de tous les $pi > 0$ .

L'ensemble {u, w, |p1|, p2} constitue les indicateurs de navigation dans le dictionnaire de concept. En effet pour déterminer, lors de la phase d'identification par exemple, le concept le plus proche d'un terme ti, on calcule la valeur pti = $u^T (t_i - w)$ puis on sélectionne le noeud associé à C1 si $\|pti| - |p1\| < \|pti|- p2|$ et on sélectionne le noeud C2 si non. On itère le processus jusqu'à ce que l'on ait atteint une des feuilles de l'arbre.

Un module détecteur de singularité 508 peut être associé au module 506 de répartition des concepts.

Ce détecteur de singularité permet de sélectionner l'ensemble Ci à décomposer. Une des méthodes possibles consiste à sélectionner l'ensemble le moins compact.

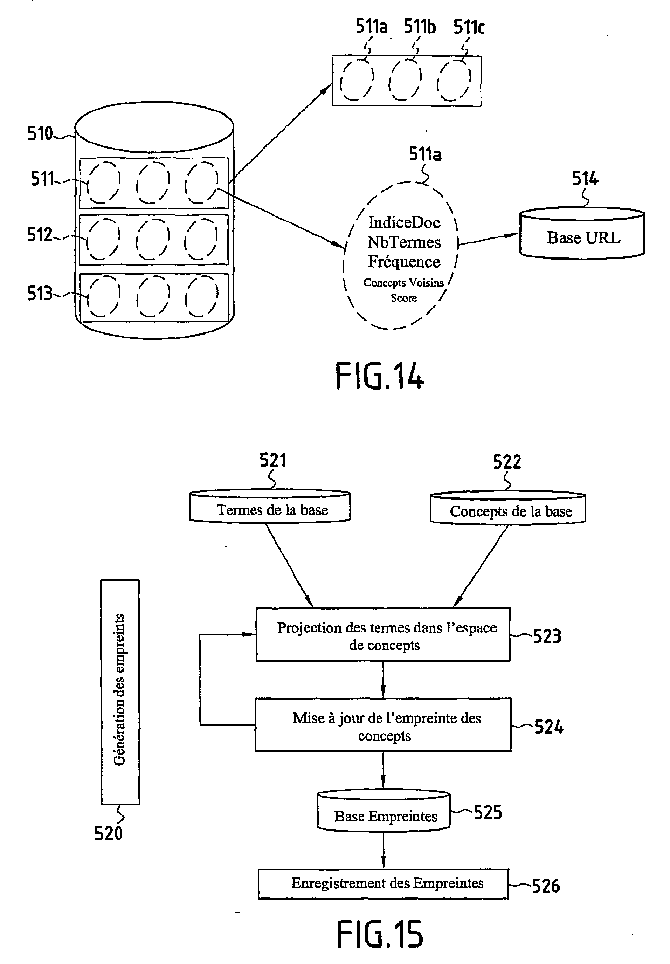

Les Figures 14 et 15 illustrent l'indexation d'un document ou d'une base de documents et la construction d'une base d'empreintes 510.

La base d'empreinte 510 est constituée de l'ensemble des concepts représentant les termes des documents à protéger. A chaque concept Ci de la base d'empreinte 510 est associée une empreinte 511, 512, 513 constituée par un ensemble d'informations telles que le nombre de termes dans les documents où le concept est présent, et pour chacun de ces documents on enregistre une empreinte 511a, 511b, 511c comprenant l'adresse IndiceDoc du document, le nombre de termes, le nombre d'occurrences du concept (fréquence), le score, ainsi que les concepts qui lui sont voisins dans le document. Le score est une valeur moyenne des mesures de similarité entre le concept et les termes du document qui sont les plus proches du concept. L'adresse IndiceDoc d'un document donné est stockée dans une base 514 des adresses des documents protégés.

Le processus 520 de génération des empreintes ou signatures de documents à indexer est illustré sur la Figure 15.

Lors de l'enregistrement d'un document IndiceDoc, on extrait les termes pertinents du document (étape 521) et on prend en compte le dictionnaire des concepts (étape 522). Chacun des termes $t_i$ du document IndiceDoc est projeté dans l'espace du dictionnaire de concepts afin de déterminer le concept $c_i$ représentant le terme $t_i$ (étape 523).

On met ensuite à jour l'empreinte du concept $c_i$ (étape 524). Cette mise à jour s'effectue selon que le concept a déjà été rencontré, c'est-à-dire est présent dans les documents qui sont déjà enregistrés ou non.

Si le concept $c_i$ n'est pas encore présent dans la base, on crée une nouvelle entrée dans la base (une entrée dans la base correspond à un objet dont les éléments sont des objets contenant la signature du concept dans les documents où ce concept est présent). On initialise l'entrée créée avec la signature du concept. La signature d'un concept dans un document IndiceDoc est matérialisée principalement par les informations suivantes : IndiceDoc, Nb-Termes, Fréquence, Concepts Voisins et score.

Si le concept $c_i$ existe dans la base, on ajoute à l'entrée associée au concept sa signature dans le document IndiceDoc qui est composée de (IndiceDoc, NbTermes, Fréquence, Concepts Voisins et score).

Lorsque la base d'empreintes est construite (étape 525), on procède à l'enregistrement de la base d'empreintes (étape 526).

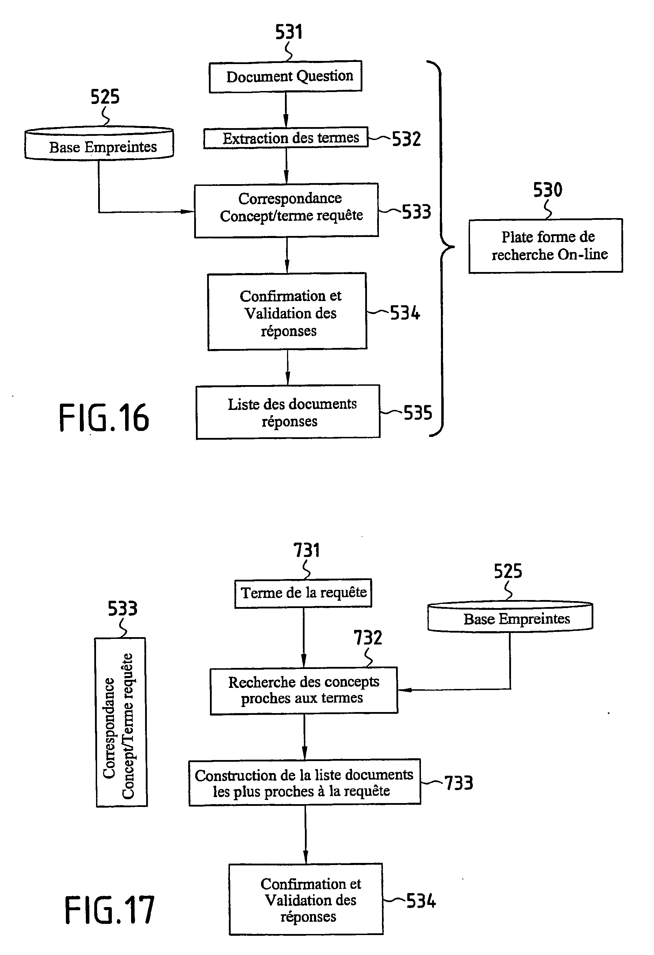

La Figure 16 illustre un processus d'identification d'un document qui est implémenté sur une plate-forme 530 de recherche en ligne.

L'identification d'un document a pour objectif de déterminer si un document posé comme question est la réutilisation d'un document de la base. Elle est basée sur la mesure de similarité entre documents. Le but est d'identifier les documents contenant des éléments protégés. La reprise peut être totale ou partielle. Dans ce dernier cas, l'élément copie a subi des modifications telles que : suppression de phrases dans un texte, suppression de motif dans une image, suppression de plan ou de séquence dans un document vidéo,... changement d'ordre des termes ou substitution de termes par d'autres termes dans un texte.

Après présentation d'un document à identifier (étape 531), on procède à l'extraction des termes de ce document (étape 532).

En liaison avec une base d'empreintes (étape 525), on met en correspondance les concepts calculés à partir des termes extraits de la question, avec les concepts de base (étape 533), afin d'établir une liste de documents ayant des contenus similaires aux contenus du document question.

Le processus d'établissement de la liste est le suivant :

On note $p_{dj}$ : le degré de ressemblance du document dj au document question, avec $1 \leq j \leq N,$ N est le nombre de documents de la base de référence
On initialise à zéro tous les $p_{dj}$

Pour chaque terme ti de la question fourni à l'étape 731 (Figure 17) on détermine le concept Ci qui le représente (étape 732).

Pour chaque document dj où le concept est présent on met à jour son $p_{dj}$ de la manière suivante :
pdj =pdj + f(frequence, score), plusieurs fonctions f peuvent être utilisées par exemple f(fréquence,score) =fréquence×score, fréquence désigne le nombre d'occurrences du concept Ci dans le document dj et score désigne la moyenne des scores de ressemblance des termes du document dj avec le concept Cj.

On ordonne les $p_{dj}$ et on conserve ceux qui sont supérieurs à un seuil donné (étape 733). On procède ensuite à une confirmation et une validation des réponse (étape 534).

Confirmation des réponses : la liste des réponses est filtrée afin de n'en garder que les réponses les plus pertinentes. Le filtrage utilisé est basé sur la corrélation entre les termes de la question et de chacune des réponses.

Validation: elle permet de ne conserver que les réponses où il y a une grande certitude de reprise de contenu. Dans cette étape les réponses sont filtrées en tenant compte des propriétés algébriques et topologiques des concepts à l'intérieur d'un document : on exige que le voisinage dans le document question soit respecté dans les documents réponses, c'est à dire que deux concepts voisins dans le document question doivent être voisins dans le document réponse.

On fournit alors la liste des documents réponses (étape 535).

On considérera maintenant plus particulièrement le cas de documents multimédias contenant des images.

On décrira en particulier pour la construction de la base d'empreintes qui servira d'outil pour l'identification d'un document, des procédés rapides et efficaces d'identification d'images qui tiennent compte de toutes les informations pertinentes contenues dans les images allant de la caractérisation des structures ou objets qui la composent, à celle des zones texturées et à la couleur de fond. Les objets de l'image sont identifiés par la production d'une table résumant différentes statistiques faites sur des informations des zones frontières des objets ainsi que des informations sur les voisinages de ces zones frontières. La caractérisation des zones texturées peut être effectuée à l'aide d'une description très fine à la fois spatiale et spectrale de la texture suivant trois caractéristiques fondamentales qui sont sa périodicité, son orientation globale et l'aspect aléatoire de son motif. La texture est ici assimilée à une réalisation de processus aléatoire bidimensionnel. La caractérisation de la couleur est un volet important de la méthode. Elle peut être utilisée comme un premier tri des réponses similaires basées sur la couleur, ou alors une dernière décision faite pour affiner la recherche.

Dans le premier volet de la phase de construction d'empreintes, on prend en compte des informations classifiées sous forme de composants appartenant à deux grandes catégories :

- les composants dits structurels qui décrivent la perception par l'oeil d'un objet pouvant être isolé ou d'un ensemble d'objets disposés selon un arrangement spatial,
- les composants dits texturaux qui sont le complément des composants structurels et qui traduisent la régularité ou l'homogénéité des motifs de texture.

Comme indiqué plus haut, lors de la phase de construction d'empreintes, chaque document de la base de documents est analysé afin d'en extraire les informations pertinentes. Ces informations seront ensuite répertoriées et analysées. Cette analyse se fait suivant un enchaînement de procédures qui se résume en trois étapes :

- Extraction pour chaque document de caractéristiques prédéfinies et stockage de ces informations dans un vecteur appelé terme.
- Regroupement dans un concept de tous les termes "voisins" du point de vue de leurs caractéristiques, ce qui permet de rendre la recherche plus concise.
- Construction d'une empreinte qui caractérise ce document par un nombre réduit d'entités. Chaque document est ainsi associé à une empreinte qui lui est propre.

Lors d'une phase ultérieure de recherche, suite à une requête formulée par un utilisateur, par exemple l'identification d'une image question, on recherche tous les documents multimédias similaires ou répondant à cette requête. Pour ce faire, comme indiqué plus haut, on calcule les termes du document question et on les compare aux concepts de la base afin de déduire le ou les documents de la base qui sont similaires au document question.

On décrira ci-dessous de façon plus détaillée la phase de construction des termes d'une image.

La phase de construction des termes d'une image met en oeuvre utilement la caractérisation des supports structurels de l'image. Les supports structurels sont les éléments qui composent la scène de l'image. Les plus significatifs sont ceux qui délimitent les objets de la scène car ce sont eux qui caractérisent les différentes formes qui sont perçues lorsqu'on observe une quelconque image.

Cette étape concerne l'extraction de ces supports structurels. Elle consiste en un démantèlement des zones frontières des objets de l'image, qui sont caractérisées par des endroits entre deux zones où de fortes variations d'intensité sont observées. Ce démantèlement s'opère par un procédé qui consiste à répartir ces zones frontières parmi différentes *« classes »* selon l'orientation locale du gradient de l'image (orientation de la variation locale d'intensité). On obtient ainsi une multitude de petits éléments dénommés les *« Eléments de Support structurels» (ESS).* Chaque *ESS* appartenant effectivement à un contour d'une scène est caractérisé par une similarité au niveau de l'orientation locale de son gradient. Ceci est une première étape qui vise à répertorier tous *les éléments de Support structurels* de l'image.

La démarche suivante s'opère désormais à partir de *ces ESS,* à savoir la construction de *termes* décrivant les propriétés locales et globales des *ESS.*

Sont considérées comme propriétés locales les informations extraites de chaque support. Deux types de supports peuvent être distingués : les éléments de droites rectilignes (EDR) et les éléments d'arcs de courbes (EAC).

Les éléments de droites rectilignes EDR sont caractérisés par les propriétés locales qui sont :

■ La dimension (longueur, largeur)

■ Direction principale (pente)

■ Propriétés statistiques des pixels constituant le support (valeur moyenne d'énergie, les moments)

■ Informations du voisinage (Transformée de Fourier locale)

Les éléments d'arcs de courbes EAC quant à eux sont caractérisés de la même façon que précédemment, en plus de la courbure des arcs.

Les propriétés globales englobent les statistiques telles que le nombre de chaque type de supports et leurs dispositions spatiales (associations géométriques entre les supports : connexités, gauche, droite, milieux...).

En résumé, pour une image donnée, les informations pertinentes extraites des objets la constituant sont regroupées sur le tableau 1.

Tableau 1

| Supports structuraux des objets d'une image | | Type | | |
|---|---|---|---|---|
| | | ESS | EDR | EAC |
| Propriétés globales | Nb total | $n$ | $n_1$ | $n_2$ |
| | Nb longs (> seuil) | $nl$ | $n_1l$ | $n_2l$ |
| | Nb courts (< seuil) | $nc$ | $n_1c$ | $n_2c$ |
| | Nb de supports longs à une connexion gauche ou droite | - | $n_1lgdx$ | $n_2lgdx$ |
| | Nb d'une connexion milieu | - | $n_1lgdx$ | $n_2lgdx$ |
| | Nb de supports longs parallèles | - | $n_1pll$ | $n_2pll$ |
| Propriétés locales | Luminance (>seuil) | - | | |
| | Luminance (<seuil) | - | | |
| | Pente | - | | |
| | Courbure | - | | |
| | Caractérisation du voisinage des supports | - | | |

La phase de construction des termes d'une image met en oeuvre également la caractérisation des informations texturales pertinentes de l'image. Les informations venant de la texture de l'image sont divisées selon trois aspects visuels de l'image :

■ l'aspect aléatoire (comme une image de sable fin, ou d'herbe) où aucun arrangement particulier ne peut être décelé,
■ l'aspect périodique (comme un pull en jacquard) où une répétition de motifs (pixel ou groupement de pixels) dominants est observée,
■ et enfin l'aspect directionnel où les motifs tendent globalement à s'orienter vers une ou des directions privilégiées.

Ces informations sont obtenues en approchant l'image par des modèles ou représentations paramétriques. Chaque aspect est pris en compte par ses représentations spatiale et spectrale qui constituent les informations pertinentes de cette partie de l'image. La périodicité et l'orientation sont caractérisées par les supports spectraux tandis que l'aspect aléatoire se traduit par l'estimation des paramètres d'un modèle autorégressif bidimensionnel.

Une fois toutes les informations pertinentes extraites, on peut procéder à la structuration des termes des textures.

Tableau 2

| Supports spectraux et paramètres autorégressifs de la texture d'une image | | |
|---|---|---|
| Composante périodique | Nb total d'éléments périodiques | $np$ |
| | Fréquences | Couple $(\omega_p, v_p)$, $0 < p \le np$ |
| | Amplitudes | Couple $(C_p, D_p)$, $0 < p \le np$ |
| Composante directionnelle | Nb total d'éléments directionnels | $nd$ |
| | Orientations | Couple $(\alpha_i, \beta_i)$, $0 < i \le nd$ |
| | Fréquences | $v_i$, $0 < i \le nd$ |
| Composantes aléatoires | Ecart-type du bruit | $\sigma$ |

(suite)

| Supports spectraux et paramètres autorégressifs de la texture d'une image | | |
| --- | --- | --- |
| | *Paramètres autorégressifs* | $\{a_{i,j}\}$, $(i,j) \in S_{N,M}$ |

La phase de construction des termes d'une image peut enfin mettre également en oeuvre la caractérisation de la couleur de l'image.

La couleur est souvent représentée par les histogrammes de couleur, ces derniers sont invariants à la rotation et robustes contre l'occlusion et les changements de points de vue de la caméra.

La quantification des couleurs peut se faire dans l'espace RVB (Rouge, Vert, Bleu), TSV (Teinte Saturation Valeur), ou l'espace LUV mais la méthode d'indexation par les histogrammes de couleurs a prouvé ses limites car elle donne une information globale de l'image, et lors de l'indexation on peut trouver des images ayant le même histogramme de couleur, mais qui sont complètement différentes.

Beaucoup d'auteurs proposent des histogrammes de couleurs en intégrant l'information spatiale. Ceci consiste par exemple à distinguer les pixels cohérents des pixels incohérents, un pixel est cohérent s'il appartient à une région assez large regroupant des pixels identiques, il est classé incohérent s'il fait partie d'une région de taille réduite.

On décrira plus loin un procédé de caractérisation de la distribution spatiale des constituants de l'image (par exemple la couleur) qui est moins coûteux en temps de calcul que les méthodes citées ci dessus, et est robuste aux rotations et à la translation.

Les différentes caractéristiques extraites des éléments de support structurels, les paramètres des composants périodique, directionnel et aléatoire du champ de texture ainsi que les paramètres de la distribution spatiale des constituants de l'image constituent les *termes* pouvant servir à la description du contenu d'un document. Ces termes sont regroupés dans des *concepts* afin de réduire *les informations utiles* d'un document.

Les occurrences de ces concepts ainsi que leurs positions et leurs fréquences constituent ce qu'on appelle *l'empreinte* d'un document. Ces empreintes vont ensuite servir de trait d'union entre un document question et les documents d'une base, lors d'une phase de recherche de document.

Une image ne contient pas forcément tous les éléments et les caractéristiques décrits plus haut. Par conséquent, identifier une image commence par la détection de la présence de ses éléments constituants.

Selon un exemple de processus d'extraction des termes d'une image, une première étape consiste en la caractérisation des objets de l'image en supports structurels, et peut le cas échéant être précédée d'un test de détection d'éléments structurels permettant d'omettre cette étape dans les cas où les éléments structurels sont absents.

Une étape suivante consiste en un test pour déterminer s'il existe un fond texturé. Si c'est le cas, on passe à une étape de caractérisation du fond texturé en supports spectraux et paramètres auto-régresssifs, puis à une étape de caractérisation de la couleur de fond.

S'il n'existe pas de fond structuré, on passe directement à l'étape de caractérisation de la couleur de fond.

Enfin, on procède au stockage des termes et à la construction d'empreintes.

On reviendra maintenant de façon plus détaillée sur la caractérisation des éléments de support structurels d'une image.

Le principe de base de cette caractérisation consiste en un démantèlement des zones frontières des objets de l'image en multitudes de petits éléments de base appelés *éléments de supports significatifs* (*ESS*) qui véhiculent les *informations utiles* des zones frontières qui sont composées de bandes linéaires de taille variable, ou des coudes de différentes courbures. Des statistiques faites sur ces objets seront alors analysées et utilisées pour construire *les termes de ces supports structurels.*

Afin de décrire plus rigoureusement les principaux procédés composant cette approche, on notera une image numérisée par l'ensemble $\{y(i,j), (i,j) \in I \times J\}$, où $I$ et $J$ sont respectivement le nombre de lignes et de colonnes de l'image.

A partir des images *gradient vertical* $\{g_v(i, j), (i, j) \in I \times J\}$ et *horizontal* $\{g_h(i, j), (i, j) \in I \times J\}$ préalablement calculées, cette approche consiste à partitionner l'image selon l'orientation locale de son gradient en un nombre fini de classes équidistantes. L'image contenant l'orientation du gradient est définie par la formule :

$$O(i, j) = \arctan\left(\frac{g_h(i, j)}{g_v(i, j)}\right) \qquad (1)$$

La partition n'est autre qu'une subdivision angulaire du plan 2D (de 0° à 360°) par un pas de discrétisation bien défini. Le fait d'utiliser l'orientation locale du gradient comme critère de décomposition des zones frontières permet un meilleur groupement des pixels faisant partie d'une même zone frontière. Afin de résoudre le problème des points frontières qui peuvent être partagés entre deux *classes* juxtaposées, une deuxième partition avec le même nombre de *classes* que précédemment, mais décalées de ½ *classe* est utilisée. A partir des classes issues des deux partitions, une simple procédure consiste à choisir celles qui totalisent le plus grand nombre de pixels. En effet, chaque pixel appartient à deux *classes* chacune issue des deux partitions. Sachant que chaque pixel est un élément potentiel d'un éventuel *ESS,* il vote alors pour la classe qui contient le plus de pixels parmi les deux. Il s'agit d'une région où la probabilité de trouver un *ESS* de taille plus élevée est la plus forte possible. A la suite des votes, on retient uniquement *les classes* qui totalisent plus de 50% des suffrages. Ce sont les *régions de support* susceptibles de contenir les *ESS.*

A partir de ces *régions de support,* on détermine les *ESS,* on les répertorie selon certains critères qui peuvent être :

■ La longueur (on détermine pour cela un seuil *lo* et on comptabilise les *ESS* inférieurs et supérieurs à ce seuil)
■ L'intensité définie par la moyenne du module du gradient des pixels composant chaque *ESS.* (un seuil noté *lo* est alors défini, on répertorie ceux qui sont inférieurs et supérieurs à ce seuil).
■ Le contraste défini par la différence entre le maximum et le minimum des pixels.

A cette étape du procédé, tous les éléments dits structurels sont connus et répertoriés conformément aux types de supports structurels pré-identifiés. Ils peuvent être extraits de l'image d'origine pour laisser place à la caractérisation du champ de textures.

En l'absence d'éléments structurels, on suppose que limage est texturée avec des motifs plus ou moins réguliers et on procède à une caractérisation du champ de la texture. Pour cela, on peut procéder à une décomposition de l'image en trois composantes qui sont :

■ Une composante texturale contenant les informations anarchiques ou aléatoires (comme une image de sable fin, ou d'herbe) où aucun arrangement particulier ne peut être décelé,
■ Une composante périodique (comme un pull en jacquard) où une répétition de motifs dominants est observée,
■ et enfin une composante directionnelle où les motifs tendent globalement vers une ou des directions privilégiées.

L'objectif étant de caractériser parfaitement la texture de l'image à partir d'un ensemble de paramètres, ces trois composantes sont représentées par des modèles paramétriques.

Ainsi, la texture de l'image 15 régulière et homogène notée $\{\tilde{y}(i, j), (i, j) \in I \times J\}$ est décomposée en trois composantes 16, 17, 18 comme illustré sur la Figure 10, conformément à la relation suivante :

$$\{\tilde{y}(i, j)\} = \{w(i, j)\} + \{h(i, j)\} + \{e(i, j)\}. \qquad (16)$$

Où $\{w(i,j)\}$ est la composante purement aléatoire 16, $\{h(i,j)\}$ est la composante harmonique 17 et $\{e(i,j)\}$ la composante directionnelle 18. L'estimation des paramètres de ces trois composantes 16, 17, 18 terminé cette étape d'extraction d'informations d'un document. Des méthodes d'estimation sont décrites dans les paragraphes suivants.

On décrira d'abord un exemple de procédé de détection et caractérisation de la composante directionnelle de l'image.

Il s'agit dans un premier temps d'appliquer un modèle paramétrique à la composante directionnelle $\{e(i,j)\}$. Elle est constituée d'une somme dénombrable d'éléments directionnels où chacun est associé à un couple d'entiers $(\alpha,\beta)$ définissant une orientation d'angle θ tel que θ=tan⁻¹β/α. Autrement dit, $e(i, j)$ est défini par $e(i, j) = \sum_{(\alpha,\beta) \in O} e_{(\alpha,\beta)}(i, j)$ où chaque $e_{(\alpha,\beta)}(i,j)$ est défini par :

$$e_{(\alpha,\beta)}(i, j) = \sum_{k=1}^{Ne} [s_k^{\alpha,\beta}(i\alpha - j\beta) \times \cos(2\pi \frac{v_k}{\alpha^2 + \beta^2}(i\beta + j\alpha))$$
$$+ t_k^{\alpha,\beta}(i\alpha - j\beta) \times \sin(2\pi \frac{v_k}{\alpha^2 + \beta^2}(i\beta + j\alpha))] \qquad (17)$$

où

- *Ne* est le nombre d'éléments directionnels associés à ($\alpha$, $\beta$),
- $v_k$ est la fréquence du $k^{ième}$ élément,
- $\{s_k(i\alpha - j\beta)\}$ et $\{t_k(i\alpha - j\beta)\}$ sont les amplitudes.

La composante directionnelle $\{e(i,j)\}$ est ainsi parfaitement définie par la connaissance des paramètres contenus dans le vecteur *E* suivant :

$$E = \left\{ \alpha_l, \beta_l, \left\{ v_{lk}, s_{lk}(c), t_{lk}(c) \right\}_{lk=1}^{N_e} \right\}_{\alpha_j, \beta_j \models o} \qquad (18)$$

Pour estimer ces paramètres, on utilise le fait que la composante directionnelle d'une image est représentée dans le domaine spectral par un ensemble de droites de pentes orthogonales à celles définies par les couples d'entiers ($\alpha_l$, $\beta_l$) du modèle qui seront notés ($\alpha_l$, $\beta_l$)$^\perp$. Ces droites peuvent être décomposées en un sous ensemble de droites de même pente associé chacun à un élément directionnel.

Pour calculer les éléments du vecteur *E*, on peut adopter une approche fondée sur la projection de l'image suivant différentes directions. Le procédé consiste dans un premier temps à s'assurer de la présence de la composante directionnelle avant d'estimer ses paramètres.

La détection de la composante directionnelle de l'image est basée sur la connaissance des propriétés spectrales de celle-ci. Si on assimile le spectre de l'image à une image 3D (X,Y, Z), où (X,Y) représentent les coordonnées des pixels et Z l'amplitude, les droites qu'on cherche à détecter sont représentées par un ensemble de pics concentrés le long de droites dont les pentes sont définies par les couples ($\alpha_l$, $\beta_l$) recherchés. Pour déterminer la présence de ces droites, il suffit de comptabiliser les pics prédominants. Le nombre de ces pics renseigne sur la présence ou non de supports directionnels ou harmoniques.

On décrira maintenant un exemple de procédé de caractérisation de la composante directionnelle. Pour cela, on procède au calcul des couples de direction ($\alpha_l$, $\beta_l$) et à la détermination du nombre d'éléments directionnels.

On effectue d'abord le calcul de la transformée de Fourier Discrète (TFD) de l'image suivi d'une estimation des droites de pente rationnelle observées dans l'image transformée $\Psi(i, j)$.

Pour cela, on définit un ensemble de projections qui discrétise le domaine fréquentiel en différents angles de projection $\theta_k$, *k* fini. Cet ensemble de projection peut être obtenu de différentes manières. On peut par exemple chercher tous couples d'entiers premiers entre eux ($\alpha_k$, $\beta_k$) définissant un angle $\theta_k$, tel que $\theta_k = \tan^{-1} \dfrac{\alpha_k}{\beta_k}$ où $0 \leq \theta_k \leq \dfrac{\pi}{2}$.

Un ordre *r* tel que $0 \leq \alpha_k, \beta_k \leq r$ permet de contrôler le nombre de projections. Les propriétés de symétrie peuvent ensuite être utilisées pour obtenir tous les couples jusqu'à $2\pi$.

Des projections du module de la TFD de l'image sont effectuées suivant les $\theta_k$. Chaque projection engendre un vecteur de dimension 1, $V_{(\alpha_k, \beta_k)}$, noté $V_k$ pour simplifier la notation, qui contient les informations directionnelles recherchées.

Chaque projection $V_k$ est donnée par la formule:

$$V_k(n) = \sum_\tau \Psi(i + \tau\beta_k, j + \tau\alpha_k), \quad 0 < i + \tau\beta_k < I - 1, 0 < j + \tau\alpha_k < J - 1 \qquad (19)$$

*avec n= -i*$*\beta_k$ + *j*$*\alpha_k$ et $0 \leq |n| < N_k$ *et* $N_k = |\alpha_k|(T-1) + |\beta_k|(L-1) + 1$,
où *T*$*L$ est la taille de l'image. $\Psi(i,j)$ est le module de transformée de Fourier de l'image à caractériser.

On sélectionne pour chaque $V_k$ les éléments de fortes énergies ainsi que leurs positions spatiales. Ces éléments de forte énergie sont ceux qui présentent une valeur maximale par rapport à un *seuil* calculé selon la taille de l'image.

A cette étape de calcul, le nombre de droites est connu. On en déduit le nombre de composantes directionnelles Ne en utilisant les propriétés spectrales simples de la composante directionnelle d'une image texturée. Ces propriétés sont :

1. Les droites observées dans le domaine spectral d'une composante directionnelle sont symétriques par rapport à l'origine. On peut par conséquent réduire le domaine d'investigation sur une moitié seulement du domaine considéré.

2. Les maxima retenus dans le vecteur sont candidats à représenter des droites appartenant à des éléments directionnels. A partir de la connaissance des positions respectives des droites sur le module de transformée de Fourier discrète TFD, on en déduit le nombre exact d'éléments directionnels. La position du maximum droite correspond à l'argument du maximum du vecteur $V_k$, les autres droites du même élément sont situées tous les min{L,T}.

Après traitement des vecteurs $V_k$ et production des couples de direction $(\hat{\alpha}_k, \hat{\beta}_k)$ on obtient les nombres de droites associés à chaque couple.

Ainsi on peut compter le nombre total d'éléments directionnels en utilisant les deux propriétés sus-mentionnées et on identifie les couples d'entiers $(\hat{\alpha}_k, \hat{\beta}_k)$ associés à ces composantes qui sont les directions orthogonales à celles qui ont été retenues.

Pour tous ces couples $(\hat{\alpha}_k, \hat{\beta}_k)$ l'estimation des fréquences de chaque élément détecté est immédiate. En effet, si l'on considère uniquement les points de l'image d'origine le long de la droite d'équation $i\hat{\alpha}_k - j\hat{\beta}_k = c$, c est la position du maximum dans $Vk$, et ces points constituent un signal monodimensionnel (1-D) harmonique d'amplitude constante et qui a pour fréquence $\hat{v}_i^{(\alpha,\beta)}$. Il suffit alors d'estimer la fréquence de ce signal 1-D par un procédé classique (localisation de la valeur maximale sur la TFD 1-D de ce nouveau signal).

En résumé, on peut mettre en oeuvre le procédé comportant les étapes suivantes :

On détermine le maximum de chaque projection.

Les maximums sont filtrés afin de ne garder que ceux supérieurs à un seuil.

■ Pour chaque maximum $m_i$, correspondant à un couple $(\hat{\alpha}_k, \hat{\beta}_k)$
■ on détermine le nombre de droites associées à ce couple d'après les propriétés décrites plus haut.
■ on calcule la fréquence associée à $(\hat{\alpha}_k, \hat{\beta}_k)$ qui correspond à l'intersection de la droite maximal (correspondant au maximum de la projection retenue) avec l'axe horizontal.

On décrira maintenant le calcul des amplitudes $\left\{\hat{s}_k^{(\alpha,\beta)}(t)\right\}$ et $\left\{\hat{t}_k^{(\alpha,\beta)}(t)\right\}$ qui sont les autres paramètres contenus dans le vecteur E mentionné plus haut.

Connaissant la direction $(\hat{\alpha}_k, \hat{\beta}_k)$ et la fréquence $V_k$, on peut déterminer les amplitudes $\hat{s}_k^{(\alpha,\beta)}(c)$ et $\hat{t}_k^{(\alpha,\beta)}(c)$, pour $c$ vérifiant la formule $i\hat{\alpha}_k - j\hat{\beta}_k = c$, en utilisant un procédé de démodulation. En effet, $\hat{s}_k^{(\alpha,\beta)}(c)$ est égal à la moyenne des pixels le long de la droite d'équation $i\hat{\alpha}_k - j\hat{\beta}_k = c$ de la nouvelle image obtenue en multipliant $\tilde{y}(i, j)$ par

$\cos\left(\dfrac{\hat{v}_k^{(\alpha,\beta)}}{\hat{\alpha}_k^2 + \hat{\beta}_k^2}\left(i\hat{\beta}_k + j\hat{\alpha}_k\right)\right)$. Ceci est traduit par l'équation

$$\hat{s}_k^{(\alpha,\beta)}(c) \cong \frac{1}{N_s} \sum_{i\hat{\alpha}-j\hat{\beta}=c} \tilde{y}(i, j)\cos\left(\frac{\hat{v}_k^{(\alpha,\beta)}}{\hat{\alpha}_k^2 + \hat{\beta}_k^2}\left(i\hat{\beta}_k + j\hat{\alpha}_k\right)\right) \qquad (20)$$

où $N_S$ n'est autre que le nombre d'éléments de ce nouveau signal.

De la même manière, on obtient $\hat{t}_k^{(\alpha,\beta)}(c)$ en appliquant l'équation :

$$\hat{t}_k^{(\alpha,\beta)}(c) \cong \frac{1}{N_s} \sum_{i\hat{\alpha}-j\hat{\beta}=c} \tilde{y}(i, j)\sin\left(\frac{\hat{v}_k^{(\alpha,\beta)}}{\hat{\alpha}_k^2 + \hat{\beta}_k^2}\left(i\hat{\beta}_k + j\hat{\alpha}_k\right)\right) \qquad (21)$$

Le procédé décrit ci-dessus peut être résumé par les étapes suivantes :

Pour tout élément directionnel $(\hat{\alpha}_k, \hat{\beta}_k)$ faire

Pour toute droite (d) calculer

1. la moyenne des points (i,j) pondérée par le $\cos\left(\dfrac{\hat{v}_k^{(\alpha,\beta)}}{\hat{\alpha}_k^2 + \hat{\beta}_k^2}\left(i\hat{\beta}_k + j\hat{\alpha}_k\right)\right)$. Cette moyenne correspond à l'estimation du l'amplitude $\hat{s}_k^{(\alpha,\beta)}(d)$

2. la moyenne des points (i,j) pondérée par le $\sin\left(\dfrac{\hat{v}_k^{(\alpha,\beta)}}{\hat{\alpha}_k^2 + \hat{\beta}_k^2}\left(i\hat{\beta}_k + j\hat{\alpha}_k\right)\right)$. Cette moyenne correspond à l'estimation du l'amplitude $\hat{t}_k^{(\alpha,\beta)}(d)$

Le tableau 3 ci-dessous récapitule les étapes principales du procédé de projection.

**Tableau 3**

| |
|---|
| Etape 1. Calculer l'ensemble de couples de projection $(\alpha_k, \beta_k) \in P_r$<br>Etape 2. Calculer le module de la TFD de l'image $\tilde{y}(i,j)$ :<br><br>$$\Psi(\omega,\nu) = \left|TFD\big(y(i,j)\big)\right|$$ |
| Etape 3-Pour tout $(\alpha_k,\beta_k) \in P_r$,<br>    calculer le vecteur $V_k$ : la projection de $\Psi(\omega,\nu)$ suivant $(\alpha_k, \beta_k)$ d'après la formule (19) |
| Etape 4- Détection de droites :<br>    Pour tout $(\alpha_k,\beta_k) \in P_r$<br><br>    • déterminer : $M_k = \max_j\{V_k(j)\}$,<br><br>    • calculer $n_k$, le nombre de pixels de valeurs significatives rencontrés le long de la projection<br>    • sauvegarder $n_k$ et $j_{max}$ l'indice du maximum dans $V_k$.<br>    • sélectionner les directions qui justifient le critère<br><br>$$\frac{M_k}{n_k} > s_e$$<br><br>où $S_e$ est un seuil à définir, dépendant de la taille de l'image,<br>Les directions retenues sont considérées comme celles de droites recherchées. |
| Etape 5- Sauvegarder les couples $(\hat{\alpha}_k, \hat{\beta}_k)$ recherchés qui sont les orthogonaux des couples $(\alpha_k, \beta_k)$ retenus dans l'étape 4. |

On décrira ci-dessous la détection et la caractérisation des informations texturales périodiques d'une image, qui sont contenues dans la composante harmonique $\{h(i,j)\}$. Cette composante peut être représentée par une somme finie de sinusoïdes 2-D :

$$h(i,j) = \sum_{p=1}^{P} C_p \cos 2\pi(i\omega_p + jv_p) + D_p \sin 2\pi(i\omega_p + jv_p), \qquad (22)$$

où

- $C_p$ et $D_p$ sont les amplitudes.
- $(\omega_p, v_p)$ est la $p^{ième}$ fréquence spatiale.

Les informations que l'on cherche à déterminer sont les éléments du vecteur :

$$H = \left\{ P, \left\{ C_p, D_p, \omega_p, v_p \right\}_{p=1}^{P} \right\} \qquad (23)$$

Pour cela on commence par détecter la présence de cette composante périodique dans l'image module de Fourier et on estime ensuite ses paramètres.

La détection de la composante périodique consiste à déterminer la présence de pics isolés sur l'image module de la TFD. On opère de la même manière que dans le cas de la détermination de la composante directionnelle. D'après le procédé décrit dans le tableau 1, si la valeur $n_k$ *obtenue dans la phase 4 du procédé décrit* dans le tableau 1 est inférieure à un seuil, alors on est en présence de pics isolés qui caractérisent la présence de composante harmonique plutôt que de pics formant une droite continue.

La caractérisation de la composante périodique revient à localiser les pics isolés sur l'image module de la TFD.

Ces fréquences spatiales $(\hat{\omega}_p, \hat{v}_p)$ correspondent à la position de ces pics :

$$(\hat{\omega}_p, \hat{v}_p) = \arg\max_{(\omega,v)} \Psi(\omega,v) \qquad (24)$$

Pour le calcul des amplitudes $(\hat{C}_p, \hat{D}_p)$, on utilise un procédé de démodulation comme pour estimer les amplitudes de la composante directionnelle.

Pour chaque élément périodique de fréquence $(\hat{\omega}_p, \hat{v}_p)$, l'amplitude correspondante est identique à la moyenne des pixels de la nouvelle image obtenue en multipliant l'image $\{\tilde{y}(i,j)\}$ par $cos(i\hat{\omega}_p + j\hat{v}_p)$. Ceci est traduit par les formules suivantes :

$$\hat{C}_p = \frac{1}{L \times T} \sum_{n=0}^{L-1} \sum_{m=0}^{T-1} y(n,m) \cos(n\hat{\omega}_p + m\hat{v}_p). \qquad (25)$$

$$\hat{D}_p = \frac{1}{L \times T} \sum_{n=0}^{L-1} \sum_{m=0}^{T-1} y(n,m) \cos(n\hat{\omega}_p + m\hat{v}_p) \qquad (26)$$

En résumé, un procédé d'estimation de la composante périodique comprend les étapes suivantes :

| |
|---|
| Etape 1. Localiser les pics isolés dans la deuxième moitié de l'image module de Fourier et compter leur nombre |
| Etape 2. Pour tout pic détecté : <br> ■ Calculer sa fréquence à l'aide de la formule (24) |

(suite)

| ■ Calculer son amplitude à l'aide de la formule<br>■ (25 - 26) |
| --- |

Les dernières informations à extraire sont contenues dans la composante purement aléatoire {$w(i,j)$}. Cette composante peut être représentée par un modèle autorégressif 2-D de support demi-plan non symétrique (DPNS) fini défini par l'équation aux différences suivante :

$$w(i,j) = -\sum_{(k,l)\in S_{N,M}} a_{k,l} w(i-k, j-l) + u(i,j) \qquad (27)$$

où {$a_{(k,l)}$}$_{(k,l)\in S_{N,M}}$ sont les paramètres à déterminer pour tout ($k,l$) appartenant à $S_{N,M}$ = {$(k,l)/k = 0,1 \le l \le M$} $\cup$ {$(k,l)/1 \le k \le N, -M \le l \le M$}. Le couple ($N,M$) s'appelle l'ordre du modèle.

- {$u(i,j)$} est un bruit blanc gaussien de variance finie $\sigma_u^2$.

Les paramètres du modèle sont donnés par :

$$W = \left\{ (N,M), \sigma_u^2, \{a_{k,l}\}_{(k,l)\in S_{N,M}} \right\} \qquad (28)$$

Les méthodes d'estimation des éléments de W sont nombreuses comme par exemple l'algorithme de Levinson 2D ou alors les méthodes adaptatives du type moindres carrés (MCR).

On décrira maintenant un procédé de caractérisation de la couleur d'une image dont on veut extraire des termes t$_i$ représentant des caractéristiques iconiques de cette image, la couleur étant un exemple particulier des ces caractéristiques iconiques qui peuvent comprendre d'autres caractéristiques telles que les moments algébriques ou géométriques, les propriétés statistiques, les propriétés spectrales des moments de pseudo-Zernicke.

La méthode est fondée sur la caractérisation perceptuelle de la couleur, en premier lieu on effectue une transformation des composantes de la couleur de l'image de l'espace RVB (Rouge, Vert, Bleu) encore dénommé *RGB* vers l'espace *TSV* (Teinte Saturation Valeur) encore dénommé HSV. On obtient ainsi trois composantes : *Teinte, Saturation, Valeur. A* partir de ces trois composantes on détermine N couleurs ou composantes iconiques de l'image. Chaque composante iconique Ci est représentée par un vecteur de M valeurs. Ces valeurs représentent la distribution angulaire et annulaire des points représentant chaque composante ainsi que le nombre de points de la composante en question.

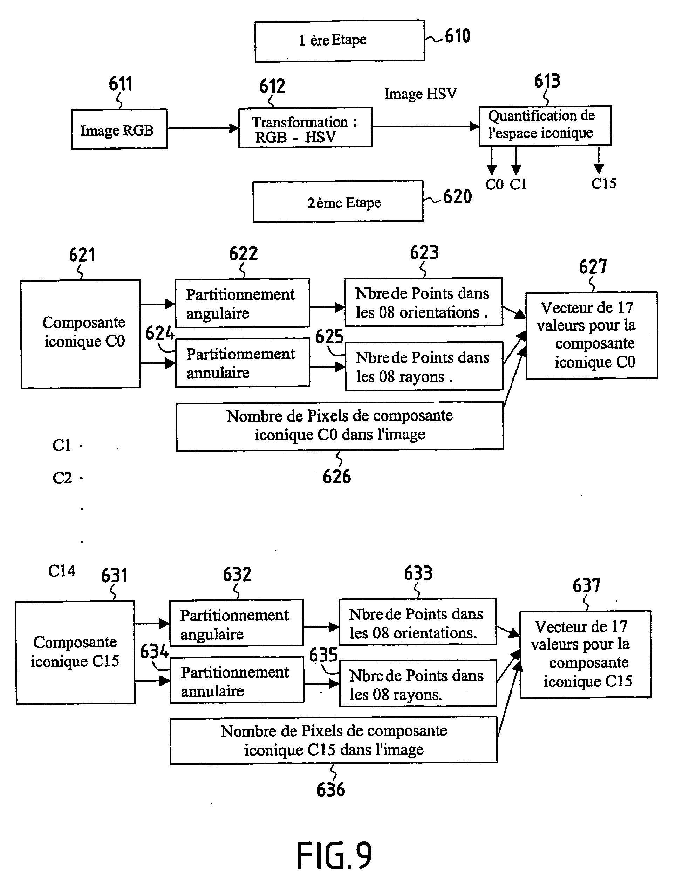

La méthode développée est illustrée par la Figure 9 avec à titre d'exemple N =16 et M= 17.

Dans une première étape principale 610, à partir d'une image 611 de l'espace RGB, on procède à une transformation de l'image 611 de l'espace (R,G,B) à l'espace HSV (étape 612) pour obtenir une image dans l'espace HSV.

Le modèle HSV peut être défini de la façon suivante.

Teinte *(H)* : varie de [0 360], et chaque angle représente une teinte.
Saturation *(S)*: varie de [0 1], elle mesure la pureté des couleurs, et permet de distinguer les couleurs "vives", "pastels", ou "délavées ".
Valeur *(V)* : Elle prend des valeurs de [0 1], elle indique si une couleur est claire ou sombre et dans quelle mesure elle se rapproche du blanc ou du noir.

Le modèle *HSV* est une transformation non linéaire du modèle de l'espace *(R,G,B)* .L'oeil humain peut distinguer 128 teintes, 130 saturations , et 23 ombres.
Pour le *Blanc V*=1 et *S*=0*,* le *noir* a une valeur *V*=0 tandis que la teinte H et la saturation *S sont* indéterminées.
Lorsque *V*=1 et *S*=1 on a une couleur pure.

Chaque couleur est obtenue en rajoutant du blanc ou du noir à la couleur pure.

Pour avoir des couleurs plus claires on réduit *S* et on garde *H* et *V,* par contre, pour des couleurs foncées on rajoute du noir en réduisant *V* et on garde *H* et *S*.

Le passage de l'image couleur exprimée dans les coordonnées *(R,G,B) en une image exprimée dans l'espace*

*(H,S, V) (*Teinte, Saturation, Valeur) s'effectue de la façon suivante :

Pour tout point de coordonnée (i,j) et de valeur $(R_k,B_k,G_k)$ on produit un point de coordonnées (i,j) et valeur $(H_k,S_k,V_k)$ avec :

$$V_k = \max(R_k, B_k, G_k)$$

$$S_k = \frac{V_k - \min(R_k, G_k, B_k)}{V_k}$$

$$H_k = \begin{cases} \dfrac{G_k - B_k}{V_k - \min(R_k, G_k, B_k)} & \text{si } V_k \text{ est égal à } R_k \\[2ex] 2 + \dfrac{B_k - R_k}{V_k - \min(R_k, G_k, B_k)} & \text{si } V_k \text{ est égal à } G_k \\[2ex] 4 + \dfrac{R_k - G_k}{V_k - \min(R_k, G_k, B_k)} & \text{si } V_k \text{ est égal à } B_k \end{cases}$$

On procède ensuite à une partition de l'espace HSV (étape 613).

A partir des valeurs de Teinte, Saturation, Valeur , on a défini N couleurs. Dans le cas où N est égal à 16, on a : Noir, Blanc, Gris clair, Gris foncé, Gris moyen, Rouge, Rose, Orange, Marron, Olive, Jaune, Vert, Bleu Ciel, Bleu-vert, Bleu, Pourpre, Magenta.

Pour chaque pixel on évalue à quelle couleur il appartient. Ensuite on calcule le nombre de points de chaque couleur.

Dans une deuxième étape principale 620, on procède à une caractérisation des partitions obtenues lors de la première étape principale 610.

Dans cette étape 620, on cherche à caractériser chaque partition Ci obtenue précédemment. Une partition est définie par sa composante iconique et par les coordonnées des pixels qui la constituent. La description d'une partition est fondée sur la caractérisation de la répartition spatiale de ces pixels (nuage de points). La méthode commence par le calcul du centre de gravité, l'axe principal du nuage de points et l'axe perpendiculaire à cet axe. Le nouveau repère est utilisé comme référence dans la décomposition de la partition Ci en plusieurs sous-partitions qui sont représentées par le pourcentage des points constituant chacune des sous-partitions. Le processus de caractérisation d'une partition Ci est le suivant :

- calculer le centre de gravité et l'angle d'orientation des composantes Ci définissant le repère de partitionnement,

- calculer la distribution angulaire des points de la partition Ci dans les N directions dans le sens contraire des aiguilles d'une montre, en N sous-partitions définies par :

$$\left(0°, \frac{360}{N}, \frac{2 \times 360}{N}, ...., \frac{i \times 360}{N}, ...., \frac{(N-1) \times 360}{N}\right)$$

- partitionner l'espace de l'image en carrés de rayons concentriques, avec calcul dans chaque rayon du nombre de points correspondant à chaque composante iconique.

Le vecteur caractéristique est obtenu à partir du nombre de points de chaque répartition de couleur Ci, du nombre de points dans les 08 sous-répartitions angulaires ainsi que du nombre de points de l'image.

Ainsi le vecteur caractéristique est représenté par 17 valeurs dans l'exemple considéré.

Sur la Figure 9, on a illustré la deuxième étape 620 de traitement à partir des composantes iconiques C0 à C15 en montrant pour les composants C0 (module 621) et C15 (module 631) les différentes étapes effectuées, à savoir le partitionnement angulaire 622, 632 conduisant à un nombre de points dans les 8 orientations considérées (étape 623, 633) et le partitionnement annulaire 624, 634 conduisant à un nombre de points dans les 8 rayons considérés (étape 625, 635), ainsi que la prise en compte du nombre de pixels de composante C0 respectivement C15 dans l'image (étape 626, respectivement 636).

Les étapes 623, 625, 626 conduisent à la production de 17 valeurs pour la composante C0 (étape 627) tandis que les étapes 633, 635, 636 conduisent à la production de 17 valeurs pour la composante C15 (étape 637).

Naturellement, le processus est analogue pour les autres composantes C1 à C14.

Les Figures 10 et 11 illustrent le fait que le procédé décrit ci-dessus est invariant à la rotation.

Ainsi, dans l'exemple de la Figure 10, l'image est partitionnée en deux sous-ensembles, l'un contenant les croix x, l'autre les ronds 0. Après calcul du centre de gravité ainsi que de l'angle d'orientation θ, on obtient le repère d'orientation qui permettra d'obtenir les 04 sous-répartitions angulaires (0˚, 90˚, 180˚, 270˚).

Par la suite, on effectue une répartition annulaire, on calcule le nombre de points dans un rayon égal à 1 puis 2. On obtient le vecteur V0 caractéristique de l'image de la Figure 10 : 19 ; 6 ; 5 ; 4 ; 4 ; 8 ; 11.

L'image de la Figure 11 est obtenue en appliquant une rotation de 90˚ à l'image de la Figure 10. En appliquant le procédé ci-dessus à l'image de la Figure 11, on obtient un vecteur V1 caractérisant cette dernière qui montre que la rotation n'influence par le vecteur caractéristique. Cela permet de conclure que la méthode est invariante à la rotation.

Comme indiqué plus haut, les méthodes permettant d'obtenir pour une image les termes représentant les couleurs dominantes, les propriétés texturales ou les structures des zones dominantes de l'image, peuvent être appliquées aussi bien sur la totalité de l'image que sur des portions de l'image.

On décrira brièvement ci-dessous des processus de segmentation d'un document qui permettent de produire les portions de l'image à caractériser.

Selon une première technique possible, on procède à une décomposition statique. L'image est décomposée en blocs avec recouvrement ou sans recouvrement.

Selon une deuxième technique possible, on procède à une décomposition dynamique. Dans ce cas, la décomposition de l'image en portions est fonction du contenu de l'image.

Selon un premier exemple de technique de décomposition dynamique, les portions sont produites à partir des germes qui sont les points de singularité de l'image (les points d'inflexions). On commence par calculer les germes, qui sont ensuite fusionnés pour qu'il n'en reste qu'un nombre réduit et enfin les points de l'images sont fusionnés aux germes ayant les mêmes propriétés visuelles (statistiques) pour produire les portions ou les segments de l'image à caractériser.

Selon une autre technique faisant appel à une segmentation hiérarchique, les points de l'image sont fusionnés pour former les n premières classes. Ensuite les points de chacune des classes sont décomposés en m classes et ainsi de suite jusqu'à atteindre le nombre de classes désiré. Lors de la fusion, les points sont affectés à la classe la plus proche. Une classe est représentée par le centre de gravité et/ou un délimiteur (boîte englobante, segment, courbe, ...).

On décrira maintenant les étapes principales d'un procédé de caractérisation des formes d'une image.

La caractérisation de la forme s'effectue en plusieurs étapes :

Pour une suppression d'effet de zoom ou variation dû aux mouvement des éléments non rigides de l'image (mouvement des lèvres, des feuilles d'arbre, ...), on procède par une multirésolution suivie d'une décimation de l'image.

Pour une réduction de l'effet de translation, l'image ou la portion de l'image est représentée par sa Transformée de Fourier.

Pour une réduction de l'effet de zoom, l'image est définie dans l'espace logarithmique polaire.

On peut mettre en oeuvre les étapes suivantes :

a/ multirésolution $f = wavelet(I,n)$ ; où I est l'image de départ et n est le nombre de décompositions
b/ projection de l'image dans l'espace logPolaire:
$g(l,m) = f(i,j)$ avec $i = l*cos(m)$ et $j = l*sin(m)$
c/ calcul de la transformée de Fourier de g : $H = FFT(g)$ ;
d/ caractérisation de H :
d1/ projection de H dans plusieurs directions (0, 45, 90 , ...) : le résultat est un ensemble de vecteurs dont la dimension est égale à la dimension du segment de projection
d2/ calcul des propriétés statistiques de chaque vecteur de projection (moyenne, variance, les moments).

Le terme représentant la forme est constitué des valeurs des propriétés statistiques de chaque vecteur de projection.

On considèrera à nouveau le schéma général du système d'interception illustré sur la figure 6.

Lors de la réception d'un document suspect, le module 260 de comparaison compare l'empreinte du document reçu à celles de la base d'empreintes. Le rôle de la fonction de comparaison est de calculer la fonction de pertinence qui, à chaque document, lui associe une valeur réelle qui indique le degré de ressemblance du contenu du document avec celui du document suspect (degré de pertinence). Si cette valeur est supérieure à un seuil, le document suspect 211 est considéré comme contenant des copies des portions du document avec lequel il vient d'être comparé. Une alerte est alors générée par les moyens 213. Elle sera traitée pour bloquer la diffusion du document et/ou générer un rapport 214 explicitant les conditions de diffusion du document.

Il est possible d'intercaler en outre, entre le module 260 de comparaison d'empreintes et les moyens 213 de traitement d'alertes, un module 212 de calcul de similarité entre documents qui comprend des moyens de production d'un vecteur de corrélation représentant un degré de corrélation entre un vecteur de concepts pris dans un ordre donné définissant l'empreinte d'un document sensible et un vecteur de concepts puis dans un ordre donné définissant l'empreinte d'un document intercepté suspect.

Le vecteur de corrélation permet de déterminer un score de ressemblance entre le document sensible et le document intercepté suspect considérés, et les moyens 213 de traitement d'alertes délivrent les références d'un document intercepté suspect lorsque la valeur du score de ressemblance de ce document est supérieure à un seuil prédéterminé.

Le module 212 de calcul de similarité entre documents interposé entre le module 260 de comparaison d'empreintes et les moyens 213 de traitement d'alertes peut présenter d'autres formes et à titre de variante peut comprendre.

(a) des moyens de production d'une onde d'interférence représentant le résultat d'appariement entre un vecteur de concepts pris dans un ordre donné définissant l'empreinte d'un document sensible et un vecteur de concepts pris dans un ordre donné définissant l'empreinte d'un document intercepté suspect, et

(b) des moyens de production d'un vecteur d'interférence à partir de cette onde d'interférence permettant de déterminer un score de ressemblance entre le document sensible et le document intercepté suspect considérés.

Des moyens 213 de traitement d'alertes délivrent les références d'un document intercepté suspect lorsque la valeur du score de ressemblance de ce document est supérieure à un seuil prédéterminé.

Le module 212 de calcul de similarité entre documents selon cette dernière variante permet de mesurer le taux de ressemblance entre deux documents en tenant compte de la propriété algébrique et topologique entre les concepts de ces deux documents. Le principe de la méthode consiste à générer dans le cas d'un linéaire (texte, audio et vidéo) une onde d'interférence qui exprime la collision entre les concepts et ses voisins des documents questions avec ceux des documents réponses. A partir de cette onde d'interférence, on calcule un vecteur d'interférence qui permet de déterminer la similarité entre documents en tenant compte du voisinage des concepts. Dans le cas d'un document à plusieurs dimensions, on produit plusieurs ondes d'interférence, soit une onde par dimension. Dans le cas d'une image par exemple, les positions des termes (concepts) sont projetées dans les deux directions et pour chaque direction, on calcule son onde d'interférence. Le vecteur d'interférence résultant est une combinaison des deux vecteurs. On décrira ci-dessous un exemple de calcul d'une onde d'interférence $\gamma$ pour un document à une seule dimension, tel qu'un document de type texte.

Soient le document texte D et le document question Q, et soit $\gamma_{D,Q}$ la fonction d'interférence définie de U (ensemble ordonné des couples (unités linguistiques :termes ou concepts, positions) (u,p) du document D) et l'ensemble E dont les valeurs sont comprises entre 0 et 2.

Dans le cas où l'ensemble est constitué des éléments à valeurs entières : E = {0, 1, 2}, la fonction $\gamma_{D,Q}$ est définie par :

$\gamma_{D,Q}(u,p) = 2 \Leftrightarrow$ l'unité linguistique « u » n'existe pas dans le document question Q.
$\gamma_{D,Q}(u,p) = 1 \Leftrightarrow$ l'unité linguistique « u » existe dans le document question Q mais isolée.
$\gamma_{D,Q}(u,p) = 1 \Leftrightarrow$ l'unité linguistique « u » existe dans le document question Q et elle a au moins une voisine « u' » qui est une voisine de l'unité linguistique « u » dans le document D.

La fonction $\gamma_{D,Q}$ peut être assimilée à un signal dont l'amplitude est entièrement comprise entre 0 et 2 et dont les échantillons sont les couples (ui,pi).

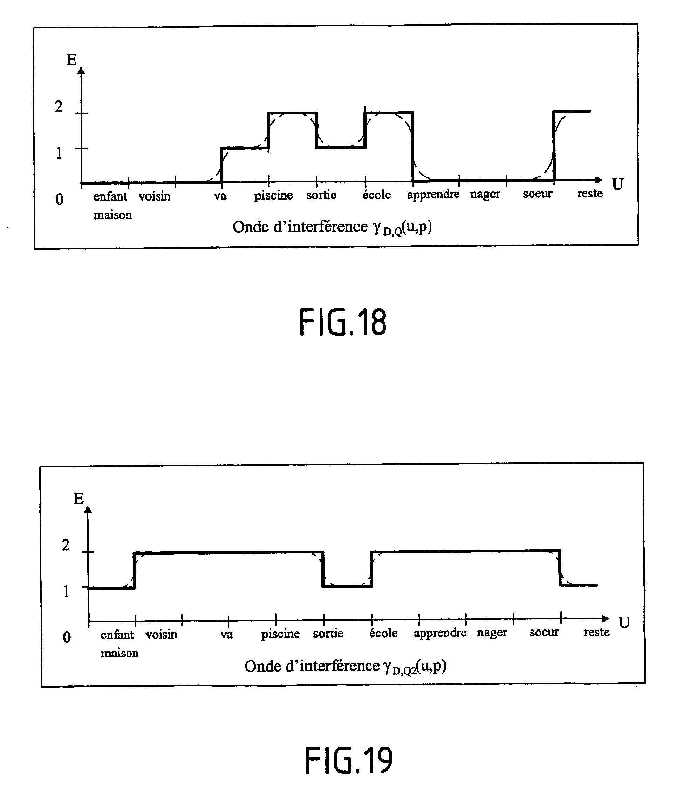

$\gamma_{D,Q}$ est appelée onde d'interférence. En effet elle permet de matérialiser les interférences qui existent entre les documents D et Q. La figure 18 correspond à la fonction (D,Q) des documents D et Q.

Exemple d'onde d'interférence :

D : "L'enfant de mon voisin va à la piscine après la sortie de l'école pour apprendre à nager, tandis que sa soeur reste à la maison"

$Q_1$ : "L'enfant de mon voisin va après l'école en vélo à la piscine pour nager, alors que sa soeur reste à la garderie".

$\gamma_{D,Q}$(enfant) = 0 parce que le mot "enfant" est présent dans D et Q, et son voisin dans D est aussi son voisin dans Q.

$\gamma_{D,Q}$(voisin) = $\gamma_{D,Q}$(va) = $\gamma_{D,Q}$(nager) = $\gamma_{D,Q}$(soeur) = $\gamma_{D,Q}$(reste) = 0 pour les même raisons.

$\gamma_{D,Q}$(piscine) = $\gamma_{D,Q}$(école) = 1 parce que les mots « piscine », « école » sont présents dans D et Q mais leurs voisins dans D ne sont pas les mêmes dans Q.

$\gamma_{D,Q}$(sortie) = $\gamma_{D,Q}$(apprendre) = $\gamma_{D,Q}$(maison) = 2 parce que les mots « sortie », « apprendre », « maison » existent dans D mais n'existent pas dans Q.

La figure 19 correspond à la fonction (D, $Q_2$) des documents D et $Q_2$.

$Q_2$ : "L'enfant rentre à la maison après l'école"

La fonction $\gamma_{D,Q}$ renseigne sur le degré de ressemblance entre D et Q. L'analyse de cette fonction permet d'identifier les documents Q qui sont proches de D. Ainsi, on peut remarquer que Q1 est plus proche de D que Q2.

Pour faciliter l'analyse de $\gamma_{D,Q}$, on peut introduire deux vecteurs $V_0$ et $V_1$, dits vecteurs d'interférence :

$V_0$ : recense le nombre de zéros contigus dans $\gamma_{D,Q}$

$V_1$ : recense le nombre de Un contigus dans $\gamma_{D,Q}$.

La dimension de $V_0$ est égale à la taille de la plus grande séquence de zéros dans $\gamma_{D,Q}$

Les vecteurs d'interférence V0 et V1 sont définis de la façon suivante :

La dimension de $V_1$ a la taille de la plus grande séquence de UN dans $\gamma_{D,Q}$

La case V0[n] contient le nombre de séquences de taille n dans le niveau 0.

La case V1[n] contient le nombre de séquences de taille n dans le niveau **1.**

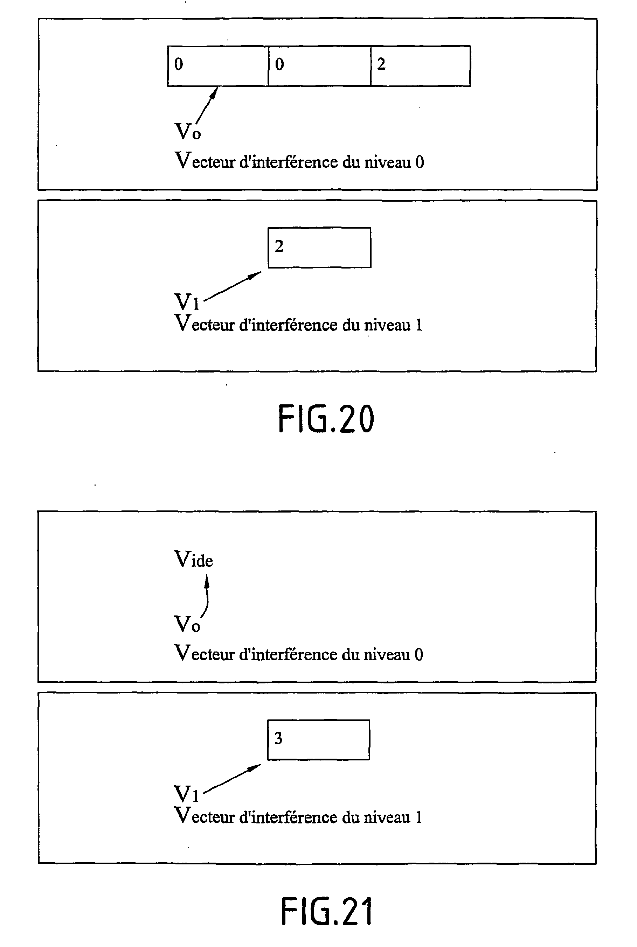

Les vecteurs d'interférence de l'exemple précédent sont illustrés sur les figures 20 et 21.

Le cas (D,$Q_1$) est illustré sur la figure 20 :

La dimension de $V_0$ est 3 parce que la séquence la plus longue dans le niveau 0 est 3.

La dimension de $V_1$ est 1 parce que la séquence la plus longue dans le niveau 1 est 1.

Le cas (D,$Q_2$) : est illustré sur la figure 21 :

Le vecteur $V_0$ est vide parce qu'il n'existe pas de séquence dans le niveau 0.

La dimension de $V_1$ est 1 parce que la séquence la plus longue dans le niveau 1 est 1.

Pour calculer le taux de similarité (score) permettant la génération des alertes, on a défini la fonction suivante :

$$\varpi = \frac{\alpha * \sum_{j=1}^{n} j \times V_0[j] + \sum_{j=1}^{m} j \times V_1[j]}{\beta}$$

tel que :

$\tilde{\omega}$ : taux de similarité (score).

$V_0$ : Vecteur d'interférence du niveau 0.

$V_1$: Vecteur d'interférence du niveau 1.

$T$: taille du document texte **D** en unités linguistiques.

$n$ : taille du vecteur d'interférence du niveau 0.

$m$ : taille du vecteur d'interférence du niveau 1.

$\alpha$: est une valeur supérieure à un, utilisée pour donner plus d'importance aux séquences de zéro. Dans les deux exemples suivants on a pris $\alpha$ égal à 2.

$\beta$ : coefficient de normalisation, il est égal à 0.02*T dans l'exemple considéré.

Cette formule permet de calculer le taux de similarité entre le document D et le document question Q.

Les scores de l'exemple précédent sont comme suit :

Cas (D,$Q_1$) :

$$\varpi = \frac{2 \times (1 \times 0 + 2 \times 0 + 3 \times 2) + (1 \times 2)}{2 \times 11} \times 100 = \frac{14}{22} \times 100 = 63{,}63\%$$

Cas $(D,Q_2)$ :

$$\varpi = \frac{(1\times 3)}{2\times 11}\times 100 = \frac{3}{22}\times 100 = 13,63\%$$

Le processus de génération d'alerte peut être le suivant :

Initialisation de la fonction de pertinence : Pertinence (i) :

Pour i = 0 à i égal au nombre de documents faire: Pertinence (i) = 0 ;

Extraction des termes du document suspect.

Pour chaque terme on détermine son concept.

Pour chaque concept $c_j$ on détermine les documents dans lesquels le concept est présent.

Pour chaque document $d_i$ mettre à jour sa valeur de pertinence :

Pertinence($d_i$) = Pertinence($d_i$) + Pertinence($d_i$, $c_j$), avec Pertinence($d_i$, $c_j$) est le degré de pertinence du concept $c_j$ dans le document $d_i$ qui dépend du nombre d'occurrences du concept dans le document et de sa présence dans les autres documents de la base : plus le concept est présent dans les autres documents plus sa pertinence est atténuée dans le document en question.

Sélectionner les K documents dont la valeur est supérieure à un seuil donné.

Corréler les termes des documents réponses avec les termes de la question et établir une nouvelle liste de réponses.

Appliquer le module 212 sur la nouvelle liste de réponses. Si le score est supérieur à un seuil donné, le document suspect est considéré comme contenant des portions des éléments de la base. Une alerte est alors générée.

On considérera à nouveau le traitement de documents dans les modules 221, 222 de création d'empreintes de documents (figure 6) et les processus d'extraction de termes (étape 502) et d'extraction de concepts (étape 504) déjà évoqués en particulier en référence à la figure 8.

Lors de l'indexation d'un document multimédia comportant des signaux vidéo, on choisit des termes ti constitués par des images-clés représentant des groupes d'images homogènes consécutives, et on détermine des concepts $c_i$ par regroupement des termes $t_i$.

La détection des images clés repose sur le regroupement des images d'un document vidéo en groupes contenant chacun uniquement des images homogènes. De chacun des groupes on extrait une ou plusieurs images (appelées images clés) représentant le document vidéo.

Le regroupement des images du document vidéo repose sur la production d'un vecteur score appelé VS représentant le contenu de la vidéo, il caractérise la variation des images consécutives de la vidéo (l'élément $VS_i$ matérialise la différence entre le contenu de l'image d'indice i et celui de l'image d'indice i-1), VS est égal à zéro quand les contenus $im_i$ et $im_{i-1}$ sont identiques et il est important quand la différence entre les deux contenus est importante.

Pour calculer le signal VS, les trois bandes de chaque image $im_i$ RGB d'indice i de vidéo sont additionnées pour ne constituer qu'une seule image qu'appelée TRi. Ensuite, l'image TRi est décomposée en plusieurs bandes de fréquence pour ne conserver que la composante basse fréquence TRBi. On utilise pour cela deux filtres à miroir (un filtre Passe bas PB et un filtre Passe Haut PH) qui sont appliqués successivement sur les lignes et sur les colonnes de l'image. On considèrera deux types de filtre : l'ondelette de Haar et le filtre dont l'algorithme est le suivant :

Balayage ligne

A partir de TRk on produit l'image Bas

Pour chaque point $a_{2xi,j}$ de l'image TR faire Calculer le point $b_{i,j}$ de l'image basse fréquence bas, $b_{i,j}$ prend la valeur médiane de $a_{2xi,j-1}$, $a_{2xi,j}$ et $a_{2xi,j+1}$.

Balayage Colonne

A partir des deux images Bas on produit l'image TRBk

Pour chaque point $b_{j,2xj}$ de l'image TR faire

Calculer le point $bb_{i,j}$ de l'image basse fréquence bas, $bb_{i,j}$ prend la valeur médiane de $b_{j,2xj-1}$, $b_{i,2xj}$ et $b_{i,2xj+1}$

Les balayages ligne et colonne sont appliqués autant de fois qu'on le souhaite. Le nombre d'itérations dépend de la résolution des images de la vidéo. Pour des images de taille 512x512 ou peut fixer n à trois.

L'image résultat TRBi est projetée dans plusieurs directions pour obtenir un ensemble de vecteurs Vk, k est l'angle de projection (l'élément j de VO, vecteur obtenu suite à la projection horizontale de l'image, est égal à la somme de tous les points de la ligne j de l'image). Les vecteurs de directions de l'image TRBi sont comparés aux vecteurs de direction de TRBi-1 pour obtenir un score i qui mesure la similarité entre ces deux images. Ce score est obtenu par la moyenne de toutes les distances des vecteurs de même direction : pour chaque k on calcule la distance entre le vecteur Vk de l'image i et le vecteur Vk de l'image i-1 puis on calcule toutes ces distances.

L'ensemble de tous les scores constitue le vecteur score VS : l'élément i de VS mesure la similarité entre l'image TRBi et l'image TRBi-1. Le vecteur VS est lissé afin d'éliminer les irrégularités du au bruit engendré lors la manipulation de la vidéo.

On décrira ci-après un exemple de regroupement des images et d'extraction des images clés.

Le vecteur VS est analysé afin de déterminer les images clés qui correspondent aux maximums des valeurs de VS. Une image d'indice j est considérée comme une image-clé si la valeur VS(j) est un maximum et si VS(j) est situé entre deux minimums minG (minimum gauche) et minD (minimum droite) et si le minimum M1 tel que M1 = min (|VS (Cj)-minG|, |VS(j)-min D|) est supérieur à un seuil donné.

Pour détecter les images-clés, on initialise minG avec VS(0) puis on parcourt le vecteur VS de la gauche vers la droite. A chaque étape, on détermine l'indice j correspondant à la valeur maximale située entre deux minimums (minG et minD) puis en fonction du résultat de l'équation définissant M1 on décide de considérer j comme un indice d'une image-clé ou non. Il est possible de prendre un groupe de plusieurs images-clés voisines, par exemple des images-clés d'indices j-1, j et j+1.

Trois cas se présentent si le minimum des deux pentes, définies par les deux minimums (minG et minD) et la valeur maximale, n'est pas supérieur au seuil :

i) Si |VS(j) - minG| est inférieur au seuil et que minG ne correspond pas à VS(o), le maximum VS(j) est ignoré et minD devient minG,

ii) Si |VS(j) - minGI est supérieur au seuil et si |VS(j)-minD| est inférieure au seuil, le minD et le maximum VS(j) sont conservés et minD est ignoré sauf si le plus proche maximum à droite de min D est supérieur à un seuil. Dans ce cas, on conserve aussi minD et on déclare j comme un indice d'une image-clé. Dans le cas où minD est ignoré, minD prendra la valeur la plus proche du minimum situé à droite de minD.

iii) Si les deux pentes sont inférieures au seuil, minG est conservé et minD et j sont ignorés.

Après sélection d'une image-clé, on itère le processus. A chaque itération minD devient minG.

## Revendications

**1.** Système d'interception de documents multimédias diffusés à partir d'un premier réseau (A), **caractérisé en ce qu'**il comprend un module (110) d'interception et de traitement de paquets d'informations comportant chacun un en-tête d'identification et un corps de données, le module (110) d'interception et de traitement de paquets comprenant des premiers moyens (101) d'interception des paquets diffusés à partir du premier réseau (A), des moyens (102) d'analyse de l'en-tête des paquets afin de déterminer si un paquet analysé fait partie d'une connexion déjà établie, des moyens (104) de traitement des paquets reconnus comme faisant partie d'une connexion déjà établie pour déterminer l'identificateur de chaque paquet reçu et accéder à un conteneur de stockage (115) où les données présentes dans chaque paquet reçu sont sauvegardées, et des moyens (103) de création d'un automate chargé de traiter les paquets reçus propres à une nouvelle connexion si les moyens (102) d'analyse de l'en-tête des paquets ont révélé qu'un paquet analysé constitue une demande de nouvelle connexion, les moyens (103) de création d'un automate comprenant notamment des moyens de création d'un nouveau conteneur de stockage (115) destiné à contenir les ressources nécessaires au stockage et à la gestion des données produites par les moyens (104) de traitement de paquets associés à la nouvelle connexion, un triplet <identificateur, drapeau de l'état de la connexion, conteneur de stockage> étant créé et associé à chaque connexion par lesdits moyens (103) de création d'un automate, et **en ce qu'**il comprend en outre des moyens (111) pour analyser le contenu des données stockées dans les conteneurs (115), reconnaître le protocole utilisé parmi un ensemble de protocoles standards tels que notamment http, SMTP, FTP, POP, IMAP, TELNET, P2P, analyser le contenu transporté par ce protocole et reconstituer les documents interceptés.

**2.** Système d'interception selon la revendication 1, **caractérisé en ce que** les moyens (102) d'analyse et les moyens (104) de traitement comprennent une première table (116) d'établissement de connexion contenant, pour chaque connexion en cours d'établissement, un identificateur "idConnexion" et un drapeau "état connexion", et une deuxième table (117) d'identification de conteneur contenant, pour chaque connexion déjà établie, un identificateur "idConnexion" et une référence "refConteneur" qui identifie le conteneur (115) dédié au stockage des données extraites des trames de la connexion ayant pour identificateur "idConnexion".

**3.** Système d'interception selon la revendication 2, **caractérisé en ce que** le drapeau "étatConnexion" de la première table (116) d'établissement de connexion peut prendre trois valeurs possibles (P10, P11, P12) selon que le paquet détecté correspond à une demande de connexion par un client, à une réponse d'un serveur ou à une confirmation par le client.

4. Système d'interception selon l'une quelconque des revendications 1 à 3, **caractérisé en ce que** les premiers moyens (101) d'interception des paquets, les moyens (102) d'analyse de l'en-tête des paquets, les moyens (103) de création d'un automate, les moyens (104) de traitement de paquets et les moyens (111) d'analyse du contenu des données stockées dans les conteneurs (115) fonctionnent de façon autonome et asynchrone.

5. Système d'interception selon l'une quelconque des revendications 1 à 4, **caractérisé en ce qu'**il comprend en outre un premier module (120) de stockage du contenu des documents interceptés par le module (110) d'interception et de traitement de paquets et un deuxième module (121) de stockage des informations concernant au moins l'émetteur et le destinataire des documents interceptés.

6. Système d'interception selon la revendication 5, **caractérisé en ce qu'**il comprend en outre un module (122) de stockage d'informations concernant des composantes résultant d'une dissection du contenu des documents interceptés.

7. Système d'interception selon l'une quelconque des revendications 1 à 6, **caractérisé en ce qu'**il comprend en outre un système centralisé (200) comprenant des moyens (221) de fabrication d'empreintes de documents sensibles à surveiller, des moyens (222) de fabrication d'empreintes de documents interceptés, des moyens (220) de stockage des empreintes fabriquées à partir des documents sensibles à surveiller, des moyens (250) de stockage des empreintes fabriquées à partir des documents interceptés, des moyens (260) de comparaison d'empreintes issues des moyens (250) de stockage des empreintes fabriquées à partir des documents interceptés et d'empreintes issues des moyens (220) de stockage des empreintes fabriquées à partir des documents sensibles à surveiller et des moyens (213) de traitement d'alertes contenant les références des documents interceptés correspondant à des documents sensibles.

8. Système d'interception selon la revendication 7, **caractérisé en ce qu'**il comprend des moyens (130) de sélection réagissant aux moyens (213) de traitement d'alertes pour assurer le blocage ou la retransmission de documents interceptés, vers un deuxième réseau (B), selon les résultats délivrés par les moyens (213) de traitement d'alertes.

9. Système d'interception selon la revendication 7 ou la revendication 8, **caractérisé en ce que** le système centralisé (200) comprend en outre des moyens (230) pour associer à chaque document sensible à surveiller des droits définissant les conditions d'exploitation du document, et des moyens (240) de stockage des informations relatives à ces droits.

10. Système d'interception selon l'une quelconque des revendications 1 à 9, **caractérisé en ce qu'**il est interposable entre un premier réseau (A) de type Intranet et un second réseau (B) de type Intranet.

11. Système d'interception selon l'une quelconque des revendications 1 à 9, **caractérisé en ce qu'**il est interposable entre un premier réseau (A) de type Internet et un second réseau (B) de type Internet.

12. Système d'interception selon l'une quelconque des revendications 1 à 9, **caractérisé en ce qu'**il est interposable entre un premier réseau (A) de type Intranet et un second réseau (B) de type Internet.

13. Système d'interception selon l'une quelconque des revendications 1 à 9, **caractérisé en ce qu'**il est interposable entre un premier réseau (A) de type Internet et un second réseau (B) de type Intranet.

14. Système d'interception selon la revendication 13, **caractérisé en ce qu'**il comprend en outre un générateur de requêtes (300) à partir de documents sensibles à protéger, pour injecter des requêtes dans le premier réseau (A).

15. Système d'interception selon la revendication 14, **caractérisé en ce que** le générateur de requêtes (300) comprend :

    - des moyens (301) de production de requêtes à partir des documents sensibles à surveiller,
    - des moyens (302) de stockage des requêtes produites,
    - des moyens (303) de fouille du premier réseau (A) à l'aide d'au moins un moteur de recherche utilisant les requêtes précédemment stockées,

- des moyens (304, 306) de stockage de références de fichiers suspects issus du premier réseau (A), et
- des moyens (305) d'aspiration des fichiers suspects référencés dans les moyens (304, 306) de stockage de références et du voisinage éventuel de ces fichiers suspects.

**16.** Système d'interception selon l'une quelconque des revendications 7 à 9, **caractérisé en ce que** lesdits moyens (260) de comparaison d'empreintes sont adaptés pour délivrer une liste de documents suspects retenus (211) avec un degré de pertinence par rapport à des documents sensibles et les moyens de traitement d'alertes (213) sont adaptés pour délivrer les références d'un document intercepté lorsque le degré de pertinence de ce document est supérieur à un seuil prédéterminé.

**17.** Système d'interception selon l'une quelconque des revendications 7 à 9, **caractérisé en ce qu'**il comprend en outre, entre lesdits moyens (260) de comparaison d'empreintes et lesdits moyens (213) de traitement d'alertes, un module (212) de calcul de similarité entre documents qui comprend :

(a) des moyens de production d'une onde d'interférence représentant le résultat d'appariement entre un vecteur de concepts pris dans un ordre donné définissant l'empreinte d'un document sensible et un vecteur de concepts pris dans un ordre donné définissant l'empreinte d'un document intercepté suspect, et
(b) des moyens de production d'un vecteur d'interférence à partir de ladite onde d'interférence permettant de déterminer un score de ressemblance entre le document sensible et le document intercepté suspect considérés, les moyens (213) de traitement d'alertes délivrant les références d'un document intercepté suspect lorsque la valeur du score de ressemblance de ce document est supérieure à un seuil prédéterminé.

**18.** Système d'interception selon l'une quelconque des revendications 7 à 9, **caractérisé en ce qu'**il comprend en outre, entre lesdits moyens (260) de comparaison d'empreintes et lesdits moyens (213) de traitement d'alertes, un module (212) de calcul de similarité entre documents qui comprend des moyens de production d'un vecteur de corrélation représentant le degré de corrélation entre un vecteur de concepts pris dans un ordre donné définissant l'empreinte d'un document sensible et un vecteur de concepts pris dans un ordre donné définissant l'empreinte d'un document intercepté suspect, le vecteur de corrélation permettant de déterminer un score de ressemblance entre le document sensible et le document intercepté suspect considérés, les moyens (213) de traitement d'alertes délivrant les références d'un document intercepté suspect lorsque la valeur du score de ressemblance de ce document est supérieure à un seuil prédéterminé.

**Claims**

**1.** A system of intercepting multimedia documents disseminated from a first network (A), the system being **characterised in that** it comprises a module (110) for intercepting and processing packets of information each including an identification header and a data body, the packet interception and processing module (110) comprising first means (101) for intercepting packets disseminated from the first network (A), means (102) for analyzing the headers of packets in order to determine whether a packet under analysis forms part of a connection that has already been set up, means (104) for processing packets recognized as forming part of a connection that has already been set up to determine the identifier of each received packet and to access a storage container (115) where the data present in each received packet is saved, and means (103) for creating an automaton for processing the received packets belonging to a new connection if the packet header analyzer means (102) show that a packet under analysis constitutes a request for a new connection, the means (103) for creating an automaton comprise in particular means for creating a new storage container (115) for containing the resources needed for storing and managing the data produced by the means (104) for processing packets associated with the new connection, a triplet comprising <identifier, connection state flag, storage container> being created and being associated with each connection by said means (103) for creating an automaton, and **in that** it further comprises means (111) for analyzing the content of data stored in the containers (115), for recognizing the protocol used from a set of standard protocols such as in particular http, SMTP, FTP, POP, IMAP, TELNET, P2P, for analyzing the content transported by the protocol, and for reconstituting the intercepted documents.

**2.** An interception system according to claim 1, **characterised in that** the analyzer means (102) and the processor means (104) comprise a first table (116) for setting up a connection and containing for each connection being set up an identifier "connectionId" and a flag "connectionState", and a second table (117) for identifying containers and containing, for each connection that has already been set up, an identifier "connectionId" and a reference "cantainerRef" identifying the container (115) dedicated to storing the data extracted from the frames of the connection having the identifier "connectionId".

3. An interception system according to claim 2, **characterised in that** the flag "connectionState" of the first table (116) for setting up connections can take three possible values (P10, P11, P12) depending on whether the detected packet corresponds to a connection request made by a client, to a response made by a server, or to a confirmation made by the client.

4. An interception system according to any one of claims 1 to 3, **characterised in that** the first packet interception means (101), the packet header analyzer means (102), the automaton creator means (103), the packet processor means (104), and the means (111) for analyzing the content of data stored in the containers (115) operate in independent and asynchronous manner.

5. An interception system according to any one of claims 1 to 4, **characterised in that** it further comprises a first module (120) for storing the content of documents intercepted by the module (110) for intercepting and processing packets, and a second module (121) for storing information relating to at least the sender and the recipient of intercepted documents.

6. An interception system according to claim 5, **characterised in that** it further comprises a module (122) for storing information relating to the components that result from detecting the content of intercepted documents.

7. An interception system according to any one of claims 1 to 6, **characterised in that** it further comprises a centralized system (200) comprising means (221) for producing fingerprints of sensitive documents under surveillance, means (222) for producing fingerprints of intercepted documents, means (220) for storing fingerprints produced from sensitive documents under surveillance, means (250) for storing fingerprints produced from intercepted documents, means (260) for comparing fingerprints coming from the means (250) for storing fingerprints produced from intercepted documents with fingerprints coming from the means (220) for storing fingerprints produced from sensitive documents under surveillance, and means (213) for processing alerts, containing the references of intercepted documents that correspond to sensitive documents.

8. An interception system according to claim 7, **characterised in that** it includes selector means (130) responding to the means (213) for processing alerts to block intercepted documents or to forward them towards a second network (B), depending on the results delivered by the means (213) for processing alerts.

9. An interception system according to claim 7 or claim 8, **characterised in that** the centralized system (200) further comprises means (230) for associating rights with each sensitive document under surveillance, and means (240) for storing information relating to said rights, which rights define the conditions under which the document can be used.

10. An interception system according to any one of claims 1 to 9, **characterised in that** it may be interposed between a first network (A) of the Intranet type and a second network (B) of the Intranet type.

11. An interception system according to any one of claims 1 to 9, **characterised in that** it may be interposed between a first network (A) of the Internet type and a second network (B) of the Internet type.

12. An interception system according to any one of claims 1 to 9, **characterised in that** it may be interposed between a first network (A) of the Intranet type and a second network (B) of the Internet type.

13. An interception system according to any one of claims 1 to 9, **characterised in that** it may be interposed between a first network (A) of the Internet type and a second network (B) of the Intranet type.

14. An interception system according to claim 13, **characterised in that** it further comprises a generator (300) for generating requests from sensitive documents to be protected, in order to inject requests into the first network (A).

15. An interception system according to claim 14, **characterised in that** the request generator (300) comprises:

    means (301) for producing requests from sensitive documents under surveillance;
    means (302) for storing the requests produced;
    means (303) for mining the first network (A) with the help of at least one search engine using the previously stored requests;

means (304, 306) for storing the references of suspect files coming from the first network (A); and
means (305) for sweeping up suspect files referenced in the means (304, 306) for storing references and for sweeping up files from the neighbourhood, if any, of the suspect files.

**16.** An interception system according to any one of claims 7 to 9, **characterised in that** said means (260) for comparing fingerprints are adapted to deliver a list of retained suspect documents (211) having a degree of pertinence relative to sensitive documents, and the alert processor means (213) are adapted to deliver the references of an intercepted document when the degree of pertinence of said document is greater than a predetermined threshold.

**17.** An interception system according to any one of claims 7 to 9, **characterised in that** it further comprises, between said means (260) for comparing fingerprints and said means (213) for processing alerts, a module (212) for calculating the similarity between documents, which module comprises:

    (a) means for producing an interference wave representing the result of pairing between a concept vector taken in a given order defining the fingerprint of a sensitive document and a concept vector taken in a given order defining the fingerprint of a suspect intercepted document; and
    (b) means for producing an interference vector from said interference wave enabling a resemblance score to be determined between the sensitive document and the suspect intercepted document under consideration, the means (213) for processing alerts delivering the references of a suspect intercepted document when the value of the resemblance score for said document is greater than a predetermined threshold.

**18.** An interception system according to any one of claims 7 to 9, **characterised in that** it further comprises, between said means (260) for comparing fingerprints and said means (213) for processing alerts, a module (212) for calculating similarity between documents, which module comprises means for producing a correlation vector representative of the degree of correlation between a concept vector taken in a given order defining the fingerprint of a sensitive document and a concept vector taken in a given order defining the fingerprint of a suspect intercepted document, the correlation vector enabling a resemblance score to be determined between the sensitive document and the suspect intercepted document under consideration, the means (213) for processing alerts delivering the references of a suspect intercepted document when the value of the resemblance score for said document is greater than a predetermined threshold.

**Patentansprüche**

**1.** System zum Abfangen von Multimediendokumenten, die von einem ersten Netz (A) aus verteilt werden, **dadurch gekennzeichnet, daß** es ein Modul (110) zum Abfangen und Verarbeiten von Informationspaketen umfaßt, welche jeweils einen Identifikationskopf und einen Datenkörper umfassen, wobei das Modul (110) zum Abfangen und Verarbeiten von Paketen Folgendes umfaßt: erste Mittel (101) zum Abfangen und Verarbeiten von Paketen, die von dem ersten Netz (A) aus verteilt werden, Mittel (102) zum Analysieren des Paketkopfes zum Bestimmen, ob ein analysiertes Paket Teil einer bereits eingerichteten Verbindung ist, Mittel (104) zum Verarbeiten der als Teil einer bereits eingerichteten Verbindung erkannten Pakete zum Bestimmen der Identifikation jedes empfangenen Pakets und Zugreifen auf einen Speicherbehälter (115), wo die in jedem empfangenen Paket vorhandenen Daten gespeichert werden, und Mittel (103) zum Schaffen eines Automaten, der für das Verarbeiten der zu einer neuen Verbindung gehörenden Pakete zuständig ist, wenn die Mittel (102) zum Analysieren des Paketkopfes festgestellt haben, daß ein analysiertes Paket eine Anfrage nach einer neuen Verbindung darstellt, Mittel (103) zum Schaffen eines Automaten, der insbesondere Mittel zum Schaffen eines neuen Speicherbehälters (115) umfaßt, welcher dazu bestimmt ist, die Ressourcen zu enthalten, die zum Speichern und Verwalten der durch die Verarbeitungsmittel (104) der Pakete, die der neuen Verbindung zugeordnet sind, erzeugten Daten erforderlich sind, wobei ein Triplett <Identifikation, Flag des Verbindungszustands, Speicherbehälter> von den Mitteln (103) zum Schaffen eines Automaten erzeugt und jeder Verbindung zugeordnet wird, und dadurch daß es außerdem Mittel (111) zum Analysieren des Inhalts der in den Behältern (115) gespeicherten Daten, Erkennen des verwendeten Protokolls aus einer Gruppe von Standardprotokollen, wie insbesondere http, SMTP, FTP, POP, IMAP, TELNET, P2P, Analysieren des durch dieses Protokolls transportierten Inhalts und Wiederherstellen der abgefangenen Dokumente umfaßt.

**2.** System zum Abfangen nach Anspruch 1, **dadurch gekennzeichnet, daß** die Mittel (102) zum Analysieren und die Mittel (104) zum Verarbeiten eine erste Tabelle (116) zum Einrichten der Verbindung, die für jede Verbindung, die eingerichtet wird, eine Identifikation "idVerbindung" und ein Flag "Verbindungszustand" enthält, und eine zweite Tabelle (117) zur Identifikation des Behälters für jede bereits eingerichtete Verbindung eine Identifikation "idVerbindung" und einen Bezug "BezBehälter" enthält, der den zum Speichern von Daten, die aus Frames der Verbindung extrahiert wurden und die eine Identifikation "idVerbindung" aufweisen, fest zugewiesenen Behälter (115) kennzeichnet, umfassen.

3. System zum Abfangen nach Anspruch 2, **dadurch gekennzeichnet, daß** das Flag "Verbindungszustand" der ersten Tabelle (116) zum Einrichten der Verbindung je nachdem, ob das erfaßte Paket einer Verbindungsanfrage durch einen Client, einer Serverantwort oder einer Bestätigung durch den Client entspricht, drei mögliche Werte (P10, P11, P12) annehmen kann.

4. System zum Abfangen nach einem der Ansprüche 1 bis 3, **dadurch gekennzeichnet, daß** die ersten Mittel (101) zum Abfangen von Paketen, die Mittel (102) zum Analysieren des Paketkopfes, die Mittel (103) zum Schaffen eines Automaten, die Mittel (104) zum Verarbeiten der Pakete und die Mittel (111) zum Analysieren des Inhalts der in den Behältern (115) gespeicherten Daten eigenständig und asynchron funktionieren.

5. System zum Abfangen nach einem der Ansprüche 1 bis 4, **dadurch gekennzeichnet, daß** es außerdem ein erstes Modul (120) zum Speichern des Inhalts der von dem Modul (110) zum Abfangen abgefangenen Dokumente und zum Verarbeiten der Pakete, sowie ein zweites Modul (121) zum Speichern von Informationen bezüglich mindestens des Senders und des Empfängers der abgefangenen Dokumente, umfaßt.

6. System zum Abfangen nach Anspruch 5, **dadurch gekennzeichnet, daß** es außerdem ein Modul (122) zum Speichern von Informationen bezüglich Komponenten, die aus einer Unterteilung des Inhalts der abgefangenen Dokumente resultieren, umfaßt.

7. System zum Abfangen nach einem der Ansprüche 1 bis 6, **dadurch gekennzeichnet, daß** es außerdem ein zentralisiertes System (200) umfaßt, welches Folgendes umfaßt: Mittel (221) zum Herstellen von Abdrücken sensibler zu überwachender Dokumente, Mittel (222) zum Herstellen von Abdrücken abgefangener Dokumente, Mittel (220) zum Speichern der aus den zu überwachenden sensiblen Dokumenten hergestellten Abdrücke, Mittel (250) zum Speichern der aus den abgefangenen Dokumenten hergestellten Abdrücke, Mittel (260) zum Vergleichen der Abdrücke, die von den Mitteln (250) zum Speichern der aus den abgefangenen Dokumenten hergestellten Abdrücken ausgegeben werden mit den Abdrücken, die von den Mitteln (220) zum Speichern der aus den zu überwachenden sensiblen Dokumenten hergestellten Abdrücken ausgegeben werden, und Mittel (213) zum Verarbeiten von Alarmen, die die Bezüge der abgefangenen Dokumente enthalten, entsprechend den sensiblen Dokumenten.

8. System zum Abfangen nach Anspruch 7, **dadurch gekennzeichnet, daß** es Mittel (130) zum Auswählen umfaßt, die auf die Mittel (213) zum Verarbeiten von Alarmen reagieren, um die Sperrung oder erneute Sendung abgefangener Dokumente an ein zweites Netz (B) gemäß den von den Mitteln (213) zum Verarbeiten von Alarmen gelieferten Ergebnissen sicherzustellen.

9. System zum Abfangen nach Anspruch 7 oder Anspruch 8, **dadurch gekennzeichnet, daß** das zentralisierte System (200) außerdem Mittel (230), um jedem zu überwachenden sensiblen Dokument Rechte zuzuordnen, die die Nutzungsbedingungen des Dokuments festlegen, und Mittel (240) zum Speichern von Informationen bezüglich dieser Rechte umfaßt.

10. System zum Abfangen nach einem der Ansprüche 1 bis 9, **dadurch gekennzeichnet, daß** es zwischen einem ersten Netz (A) vom Typ Intranet und einem zweiten Netz (B) vom Typ Intranet angeordnet werden kann.

11. System zum Abfangen nach einem der Ansprüche 1 bis 9, **dadurch gekennzeichnet, daß** es zwischen einem ersten Netz (A) vom Typ Internet und einem zweiten Netz (B) vom Typ Internet angeordnet werden kann.

12. System zum Abfangen nach einem der Ansprüche 1 bis 9, **dadurch gekennzeichnet, daß** es zwischen einem ersten Netz (A) vom Typ Intranet und einem zweiten Netz (B) vom Typ Internet angeordnet werden kann.

13. System zum Abfangen nach einem der Ansprüche 1 bis 9, **dadurch gekennzeichnet, daß** es zwischen einem ersten Netz (A) vom Typ Internet und einem zweiten Netz (B) vom Typ Intranet angeordnet werden kann.

14. System zum Abfangen nach Anspruch 13, **dadurch gekennzeichnet, daß** es außerdem einen Erzeuger von Anfragen (300) aus den zu schützenden sensiblen Daten zum Einführen der Anfragen in das erste Netz (A) umfaßt.

**15.** System zum Abfangen nach Anspruch 14, **dadurch gekennzeichnet, daß** der Erzeuger von Anfragen (300) Folgendes umfaßt:

- Mittel (301) zum Herstellen der Anfragen aus den zu überwachenden sensiblen Dokumenten,
- Mittel (302) zum Speichern der hergestellten Anfragen,
- Mittel (303) zum Durchsuchen des ersten Netzes (A) mit Hilfe mindestens eines Recherchemotors, der die zuvor gespeicherten Anfragen verwendet,
- Mittel (304, 306) zum Speichern von Bezügen verdächtiger von dem ersten Netz (A) ausgegebener Dateien, und
- Mittel (305) zum Anziehen von verdächtigen Dateien, auf die in den Mitteln (304, 306) zum Speichern von Bezügen Bezug genommen wird, und zum möglichen Nebeneinanderordnen dieser verdächtigen Dateien.

**16.** System zum Abfangen nach einem der Ansprüche 7 bis 9, **dadurch gekennzeichnet, daß** die Mittel (260) zum Vergleichen von Abdrücken dazu ausgelegt sind, eine Liste zurückgehaltener verdächtiger Dokumente (211) mit Grad an Relevanz für die sensiblen Dokumente zu liefern, und daß die Mittel zum Verarbeiten von Alarmen (213) dazu ausgelegt sind, die Bezüge eines abgefangenen Dokuments zu liefern, wenn der Grad an Relevanz dieses Dokuments über einem vorgegebenen Schwellwert liegt.

**17.** System zum Abfangen nach einem der Ansprüche 7 bis 9, **dadurch gekennzeichnet, daß** es außerdem unter den Mitteln (260) zum Vergleichen der Abdrücke und den Mitteln (213) zum Verarbeiten der Alarme, ein Modul (212) zum Berechnen der Ähnlichkeit zwischen den Dokumenten umfaßt, welches Folgendes umfaßt:

(a) Mittel zum Herstellen einer Störwelle, die das Ergebnis einer Partnerschaft zwischen einem Konzeptvektor, der in einem gegebenen Befehl genommen wird, welcher den Abdruck eines sensiblen Dokuments festlegt, und einem Konzeptvektor, der in einem gegebenen Befehl genommen wird, der den Abdruck eines verdächtigen abgefangenen Dokuments festlegt, und
(b) Mittel zum Herstellen eines Störvektors aus der Störwelle, welcher das Bestimmen eines Ähnlichkeitswerts zwischen dem betrachteten sensiblen Dokument und dem betrachteten abgefangenen verdächtigen Dokument ermöglicht, wobei die Mittel (213) zum Verarbeiten von Alarmen die Bezüge eines verdächtigen abgefangenen Dokuments liefert, wenn der Ähnlichkeitswert dieses Dokuments über einem vorgegebenen Schwellwert liegt.

**18.** System zum Abfangen nach einem der Ansprüche 7 bis 9, **dadurch gekennzeichnet, daß** es außerdem zwischen den Mitteln (260) zum Vergleichen von Abdrücken und den Mitteln (213) zum Verarbeiten von Alarmen, ein Modul (212) zum Berechnen der Ähnlichkeit zwischen Dokumenten umfaßt, welches Mittel zum Herstellen eines den Korrelationsgrad zwischen einem Konzeptvektor, der in einem gegebenen Befehl genommen wird, welcher den Abdruck eines sensiblen Dokuments festlegt, und einem Konzeptvektor, der in einem gegebenen Befehl genommen wird, welcher den Abdruck eines verdächtigen abgefangenen Dokuments festlegt, darstellenden Korrelationsvektors umfaßt, wobei der Korrelationsvektor das Bestimmen eines Ähnlichkeitswerts zwischen dem betrachteten sensiblen Dokument und dem betrachteten abgefangenen verdächtigen Dokument ermöglicht, und wobei die Mittel (213) zum Verarbeiten von Alarmen Bezüge eines abgefangenen verdächtigen Dokuments liefern, wenn der Ähnlichkeitswert dieses Dokuments über einem vorgegebenen Schwellwert liegt.

**FIG.1**

200

300

B — Réseau

100

A — Réseau

**FIG.2**

110

Interception ~101
P0

Identification ~102
P1

Nouvelle connexion

Création ~103
P2

Suite d'une communication

Traitement ~104

**FIG.3**

Identificateur | Etat

| | |
|---|---|
| id0 | P10 |
| id1 | P12 |
| Id2 | P10 |
| | |
| | |
| | |
| idN | P11 |

116

Identificateur connexion | Référence connexion

117

| | |
|---|---|
| id0 | CT0 |
| id1 | CT1 |
| | |
| id$_i$ | CTi |
| | |
| | |
| idM | CTm |

Conteneur 0 ~115

Conteneur i ~115

Conteneur M ~115

# FIG.4

201

230

200

210

261

213

240

122

121

A

100

110

111

http
smtp

130

120

214

Internet
Ou
Intranet

B

Rapport

# FIG.5

10

1

Création des
empreintes et
droits associés

11

Créateur
de
document

2

Envoi des
empreintes

14

3

Stockage des
empreintes et
des droits

15

4

Accusé de
reception

20

22

Création de
l'empreinte

23

Comparaison
d'empreintes

17

24

Sauvegarde des
transactions

25

Vérification
des droits

21

Envoi d'un
document

16

12

Expéditeur
de document

26

Blocage ou
Transmission

13

Récepteur
du document

EP 1 704 695 B1

FIG.6

FIG.7

**Etapes de protection**

**Etapes d'identification**

38

EP 1 704 695 B1

501 502 503 504 505

| Base de documents | Extraction de Termes | Base De Termes | Extraction de Concepts | Dictionnaire De Concepts |

FIG.8

Angle d'orientation

θ

Centre de Gravité

Repère de partition-nement

| 19 | 6 | 5 | 4 | 4 | 8 | 11 |

V0

FIG.10

Angle d'orien-tation

θ

Repère de partition-nement

Centre de Gravité

| 19 | 6 | 5 | 4 | 4 | 8 | 11 |

V1

FIG.11

39

1 ère Etape ⌐610

**611**

**612**

Image HSV

**613**

Image RGB → Transformation : RGB - HSV → Quantification de l'espace iconique

↓ ↓ ↓
C0 C1 C15

2 ème Etape ⌐620

**621**

**622**

**623**

**627**

Composante iconique C0

**624**

Partitionnement angulaire → Nbre de Points dans les 08 orientations .

**625**

Partitionnement annulaire → Nbre de Points dans les 08 rayons .

Vecteur de 17 valeurs pour la composante iconique C0

Nombre de Pixels de composante iconique C0 dans l'image

C1 ·

C2 ·

**626**

·

·

·

C14

**631**

**632**

**633**

**637**

Composante iconique C15

**634**

Partitionnement angulaire → Nbre de Points dans les 08 orientations.

**635**

Partitionnement annulaire → Nbre de Points dans les 08 rayons.

Vecteur de 17 valeurs pour la composante iconique C15

Nombre de Pixels de composante iconique C15 dans l'image

**636**

# FIG.9

$C_1$ $y_1$ $\qquad$ $C_2$ $y_2$ $\qquad\qquad$ $C_m$ $y_m$

$w_{11}$ $w_{12}$ $\cdots$ $w_{1n}$ $\qquad$ $w_{21}$ $w_{22}$ $\cdots$ $w_{2n}$ $\qquad$ $\cdots$ $\qquad$ $w_{m1}$ $w_{m2}$ $\cdots$ $w_{mn}$

$t_1$ $\quad$ $t_2$ $\quad$ $t_n$ $\qquad$ $t_1$ $\quad$ $t_2$ $\quad$ $t_n$ $\qquad\qquad$ $t_1$ $\quad$ $t_2$ $\quad$ $t_n$

# FIG.12

505
506
507
508
509

| Dictionnaire De Concepts | → | Répartition Des Concepts | → | Cartes De Concepts | → | Détecteur de Singularités | → | Cartes De Concepts + Indicateurs De navigation |

# FIG.13

511a 511b 511c

510

511

512

513

511a

IndiceDoc
NbTermes
Fréquence
Concepts Voisins
Score

514

Base URL

## FIG.14

521

522

Termes de la base

Concepts de la base

Génération des empreints

Projection des termes dans l'espace
de concepts — 523

Mise à jour de l'empreinte des
concepts — 524

520

Base Empreintes — 525

Enregistrement des Empreintes — 526

## FIG.15

531

Document Question

525

Base Empreintes

Extraction des termes ~532

Correspondance
Concept/terme requête ~533

530

Plate forme de
recherche On-line

Confirmation et
Validation des
réponses ~534

**FIG.16**

Liste des documents
réponses ~535

731

Terme de la requête

525

Base Empreintes

533

Correspondance
Concept/Terme requête

732

Recherche des concepts
proches aux termes

Construction de la liste documents
les plus proches à la requête ~733

Confirmation et
Validation des
réponses ~534

**FIG.17**

## FIG.18

## FIG.19

| 0 | 0 | 2 |
|---|---|---|

Vₒ
Vecteur d'interférence du niveau 0

| 2 |
|---|

V₁
Vecteur d'interférence du niveau 1

## FIG.20

Vide

Vₒ
Vecteur d'interférence du niveau 0

| 3 |
|---|

V₁
Vecteur d'interférence du niveau 1

## FIG.21